(19) Europäisches Patentamt
European Patent Office
Office européen des brevets

(11) **EP 4 657 192 A1**

(12) **EUROPEAN PATENT APPLICATION**

(43) Date of publication:
**03.12.2025 Bulletin 2025/49**

(21) Application number: **25177504.5**

(22) Date of filing: **20.05.2025**

(51) International Patent Classification (IPC):
**G05B 19/418** (2006.01)   **G06Q 50/04** (2012.01)

(52) Cooperative Patent Classification (CPC):
**G05B 19/41865; G06Q 50/04; G05B 2219/32301**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.05.2024 JP 2024086651**

(71) Applicant: **Hitachi, Ltd.**
**Tokyo 100-8280 (JP)**

(72) Inventors:
• **MORISAWA, Toshihiro**
  **Tokyo 100-8280 (JP)**

• **NAKANO, Takahiro**
  **Tokyo 100-8280 (JP)**
• **KAJITA, Daiki**
  **Tokyo 100-8280 (JP)**
• **UMEDA, Shota**
  **Tokyo 100-8280 (JP)**
• **TSUTSUMI, Daisuke**
  **Tokyo 100-8280 (JP)**
• **KITAJIMA, Kaoru**
  **Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **PROCESS PLANNING DEVICE**

(57)    A process planning device includes a data storage unit configured to store product information, operation information, and facility element information, in which combination record information of facilities configuring units of operation of a process is stored in the data storage unit, a desired combination of facilities is narrowed down based on the combination record information from candidates of combinations of facilities configuring each of the units of operation, an operation time and an amount of facility cost for each of the narrowed combinations of facilities are calculated based on the stored facility element information and the stored operation information, the combination of facilities having a predetermined threshold or less is selected based on the calculated operation time and the calculated amount of facility cost, and a facility sharable in the unit of operation corresponding to the combination of facilities is selected based on a plurality of the selected combinations of facilities, and a process is planned based on the sharable facility.

FIG. 1

Start — 101
ACQUIRE (INPUT) SEQUENCE OF UNITS OF OPERATION REQUIRED FOR MANUFACTURING PRODUCT — 102
ACQUIRE PRODUCT INFORMATION, PROCESS INFORMATION, UNIT-OF-OPERATION INFORMATION, AND COMBINATION INFORMATION THEREOF — 103
RETRIEVE FACILITY CONFIGURATION INFORMATION FOR UNIT OF OPERATION — 104
ACQUIRE OPERATION TIME AND AMOUNT OF FACILITY COST FOR EACH UNIT OF OPERATION — 105
SELECT (PRIORITIZE) PROCESS APPLICATION OBJECT OF UNIT OF OPERATION — 106
CONSOLIDATE CONTINUOUS UNITS OF OPERATION TO SHARE FACILITY, AND GENERATE SEQUENCE OF PROCESSES FOR MANUFACTURING PRODUCT — 107
Finish — 108

**Description**

BACKGROUND OF THE INVENTION

1. Field of the Invention

The present invention relates to a process planning device in which, in product production on a manufacturing line including a sequence of processing and assembly processes, a configuration of the device in each process in a sequence of manufacturing processes for a product is acquired as a configuration of the line. The present invention also relates to an information processing method and a data configuration for implementing the processing.

The present invention particularly relates to, when a sequence of operation procedures such as assembly procedures or processing procedures for manufacturing a product are determined, means for determining one set including a facility and people required for implementing each of the operations, determining a process facility, and determining processes and an order thereof, that is, a process flow, and a process planning device for the determination.

Recently, along with computerization of the manufacturing industry, in particular, sophistication of an information communication technique related to an IoT or a wireless communication technique and an information processing technique such as AI, a production system such as a cyber-physical system (CPS), a cyber-physical production system (CPPS), or digital twin (DT) is applied to actual production. It is desired that the production supports international standards such as ISO or IEC, the production activity is based on an information technique, and the plan thereof is optimized for productivity and is sustainable.

In a factory centering on the processing and assembly operations, computerization regarding production facilities or worker activities in the related art has progressed compared to the past. Particularly, price reduction of robots and technique proliferation have progressed, and proliferation of local device operation automation such as IoT has also progressed. In order to facilitate production based on the information technique, it is required to set information regarding the facilities and the production method as objects using "terms" and to represent a relationship between the objects, and the representation of appropriate "terms" is the base of the human-centric production of Industry 5.0. Therefore, production ontology is conceived. Ontology is the philosophy of realism but, here, refers to a knowledge representation method regarding information processing derived from the philosophy. According to the production ontology, by configuring a relationship between objects, information of the manufacturing line can be configured, the line configuration can be determined, and the line configuration is optimized through optimization processing.

The information of the line configuration is utilized in the production execution.

In addition, information for the line configuration is stored and accumulated in a database, and is utilized for newly designing a line and for improving the line. In addition, the present invention proposes a product or part, a unit of operation, a line configuration method using a relationship between facility elements, and an optimization method for line design.

2. Description of Related Art

In general, a factory for producing a product is necessary, a manufacturing line in a production facility where desired products can be manufactured is constructed and, in case of a manufacturing line in operation, the configuration of the manufacturing line is changed to implement the production. In order to introduce the production facility required for the production, the processes of processing and assembly are planned from information of the product, a device is selected in consideration of the capacity of processing and assembly in each of the processes, and the devices are aligned. The processes required for producing the product are determined based on the result of process planning.

Along with the recent computerization of the manufacturing industry, the production system in the concept of CPS or digital twin DT is constructed. Not only processing of production preparation such as collection of information for every production execution, process planning in an information space based on a facility configuration corresponding to the current facility, and scheduling but also processing of controlling actual production can be evaluated in advance by a simulation. In the environment of CPS or DT, a model for representing the facility configuration is installed in the information space.

Regarding the information model of the manufacturing line, the representation method called ontology is used. Specifically, this method is used to represent data in accordance with a specification for a sequence of data description, for example, XML (extended markup language), RDF (resource description framework), or OWL (web ontology language) using a standards body such as W3C, and to implement information processing. In addition, things to be represented (objects and events, substances and phenomena, spatial and temporal things, things that are present and things in the specification, and the like) are required to be reasonable for the purpose, to be sufficiently easy to handle from the viewpoint of information processing, and to be agreed among people and society.

In order to construct or reconfigure the manufacturing line, a cell for representing a process of the manufacturing line is treated as a unit. The cell refers to a facility where a product, a part, or a work (product in production) is handled on the manufacturing line of processing, assembly, carrying, or the like, and is configured with each of devices such as a robot, a carrier, a parts supply equipment, and a worktable. The devices also include sensors and devices for PLC (programmable logic controller, ladder control) for implementing a partial operation or control. These devices and units are called components or resources.

Robots are spread, and robots that assist processing can also configure cells of a machining process. Two or more robots can collaborate together to configure a cell, and a worker and a robot can collaborate together to configure a cell. In addition, operations such as a control of a conveyer or clamping of a tray that carries a part are automated on the manufacturing line using the PLC.

Elemental facilities in a cell are standard in the cell, and facilities that have different functions or performances but are interchangeable as the same model are treated as a module. In addition, cell themselves are treated as a module when the cells are interchangeable depending on products to be handled on the manufacturing line.

In product production, for example, in case of an assembly product, a sequence of processes are configured by adding a part to a base part and fixing the parts by fastening or the like such that a product having a desired function can be manufactured. The production progresses by loading parts and executing processing using a facility or a tool in each of processes. That is, in order to execute the production, the process and the facility are determined. This operation is called line designing and line configuring. The manufacturing of a product pass through many operations. Only assembly of two parts requires at least three operations including installation in a worktable, assembling, and unloading the assembly. These operations may be the processing content of one process or may be distributed. That is, by distributing many operations into processes of at least a smaller number than the number of the operations, a sequence of processes, that is, a process flow is determined.

JP2018-128766A discloses an operation process planning method. In a manufacturing facility where a material product is manufactured by lining up and installing multiple stages of processing facility groups where a plurality of processing facilities for processing a material are arranged and placed and allowing the material to pass through the multiple stages of processing facility groups, for example, a plan of placing workers such that the total time of all of the operation process of production of a plurality of semi-finished products is minimized is made. That is, JP2018-128766A discloses that the facilities are lined up and installed to correspond to various operations.

JP2003-36296A discloses management of a manufacturing process of a process group. JP2003-36296A discloses that data representing a profit rate acquired based on information regarding a process as a bottleneck in each of a plurality of process groups is collected through a network from an information terminal set for each of the process groups, and an optimum combination of process groups where the total profit of the manufacturing process is maximized is acquired using the data representing the profit rate of each of the process groups to manage the manufacturing process of the process group.

The technique of JP2018-128766A is a method of acquiring productivity by grouping and stepwisely arranging facility groups to be supportable for a variation of production objects.

The technique of JP2003-36296A is a method of changing a combination of process groups based on the profit rate as an evaluation axis of productivity.

Both of the methods disclosed in JP2018-128766A and JP2003-36296A presuppose that processes are prepared in advance. However, with the methods, it is difficult to flexibly support a product change or the like.

SUMMARY OF THE INVENTION

Accordingly, an object of the present invention is to provide a process planning device where the content of a process is flexibly changeable depending on a product or an operation content.

An example of the present invention for achieving the above-described object is as follows.

A process planning device includes a data storage unit configured to store product information, operation information, and facility element information, in which combination record information of facilities configuring units of operation of a process is stored in the data storage unit, a desired combination of facilities is narrowed down based on the combination record information from candidates of combinations of facilities configuring each of the units of operation, an operation time and an amount of facility cost for each of the narrowed combinations of facilities are calculated based on the stored facility element information and the stored operation information, the combination of facilities having a predetermined threshold or less is selected based on the calculated operation time and the calculated amount of facility cost, and a facility sharable in the unit of operation corresponding to the combination of facilities is selected based on a plurality of the selected combinations of facilities, and a process is planned based on the sharable facility.

According to the present invention, it is possible to provide a process planning device where a process is flexibly changeable depending on a product.

Other means and other effects of the present invention will be clarified through the entire content of the following specification.

BRIEF DESCRIPTION OF THE DRAWINGS

FIG. 1 is diagram illustrating a schematic flowchart of processing configuring a line;
FIG. 2 is a diagram illustrating a functional configuration of processing in a process planning device;
FIG. 3 is a diagram illustrating a flowchart of a method of determining a process facility and a process flow through a sequence of units of operation for manufacturing a product;
FIG. 4 is a diagram illustrating examples of combinations of products or parts, units of operation, and facility elements;
FIG. 5 is a diagram illustrating an assembly diagram of an example of a product;
FIG. 6 is a diagram illustrating a table of combinations of products or parts, units of operation, and facility elements, and line configurations;
FIG. 7 is a diagram illustrating a configuration of facility elements for each of units of operation;
FIG. 8 is a diagram illustrating an illustration of a line configuration;
FIGs. 9A, 9B and 9C are a diagram illustrating a calculation content of line configuration optimization;
FIGs. 10A, 10B and 10C are a diagram illustrating an example of a facility configuration for productivity improvement regarding an operation content of a process;
FIG. 11 is a diagram illustrating an order relation of processing for describing a line designing method;
FIG. 12 is a diagram illustrating objects in a line configuration and the schematic order of generating relationships therebetween;
FIG. 13 is a diagram illustrating the schematic order of generation and correction of objects regarding a new line configuration and line improvement;
FIG. 14 is a diagram illustrating a list of classes representing a manufacturing line configuration, data items in the classes, and relationships with other classes;
FIG. 15 is a diagram illustrating objects of a class and a generating relation of a relationship therebetween;
FIG. 16 is a diagram illustrating a class relation of production ontology;
FIG. 17 is a diagram illustrating a flowchart of a method of configuring a line by directly setting objects and relations;
FIG. 18 is a diagram illustrating a flowchart of a method of improving a line by directly setting objects and relations;
FIG. 19 is a diagram illustrating an example of a user interface and a screen for managing a generation status of objects and relations using a system/software;
FIG. 20 is a diagram illustrating a parts structure of a product;
FIG. 21 is a diagram illustrating data of facility elements and units of operation;
FIG. 22 is a diagram illustrating an example of classifications based on sorts of facility elements;
FIG. 23 is a diagram illustrating class relations of triplet ontology of a product or part, a unit of operation, and a facility element; and
FIG. 24 is a diagram illustrating a schematic flowchart of processing configuring a line.

DESCRIPTION OF EMBODIMENTS

In line designing, a line having high productivity is designed by setting a combination of a product or part, an operation or process, and a facility or facility element, and a production plan. The line designing relates to product designing, a line layout of a factory, designing, selection, modification, and installation of facilities, designing, implementation, or robot path planning of a control system including an information system, demand forecasting or procurement from a management system such as production planning, and a business plan such as a supply system. These operations have been supported by expertise and cooperation of all the people in charge. It is difficult to determine a process due to complication of a combination of a part, an operation, and a facility element and many variations thereof, which requires a long period for reconfiguring a line for line designing or improvement.

In the line designing, for example, the first step is to determine a configuration of facilities for implementing manufacturing through an array of processes for implementing a sequence of operations of manufacturing on a product. Further, the second step is to implement an operation content (implement a control system) for implementing production in response to a demand for a product, that is, an order and to determine a production method thereof.

Regarding the first step above, a methodology and an information technique have not been solved in CPS and digital twin. Currently, a manufacturing line is present as a substance. In that sense, a technique of constructing a line is present, and a business for executing designing, construction, and facility engineering of line is already present. Computerization of a factory has been proposed in Europe since 2010, and the outline of the function has been expressed in Industrie 4.0.

In the related art, a method of preparing and selecting a process capable of implementing various processing and assembly has been proposed. However, excessive operations are generated more than necessary, and necessary assets to be prepared increase.

On the other hand, for example, even when products are different and operation contents are partially different, even in the same process, by changing some facilities, processing in the process can be implemented. For example, a robot hand may be changed, or a jig may be additionally prepared. Alternatively, a configuration of facilities may be changed to support a plurality of products.

The present invention implements a process planning device where a process is flexibly changeable depending on a product based on the above-described way of thinking.

This method is to change the content of a process depending on a product or an operation content instead of selecting a process, and is to re-plan a process to change the processing content itself of the process. That is, this method is to determine processes by distributing a sequence of operations required for manufacturing a product into the processes.

For example, assuming that there are different operations including assembly and screw fastening, these operations are distributed into two processes. However, by executing the operations using a robot, the operations can be implemented in one process (as a process facility) using the same robot by replacing a robot hand. Alternatively, assembly and screw fastening may be executed simultaneously using two robots. Note that, in this case, a processing time of a process or a leadtime until product completion can be reduced, but the facility cost of a robot facility increases. In other terms, the cost can also be reduced. It can be seen that, by determining a facility configuration of a process on the working level, the productivity can be improved in terms of the amount of production and the cost.

In addition, to that end, even in the above-described line designing or the first step of determining a line configuration, it is necessary to provide a method of treating information with which a facility configuration of the process is changeable, that is, a facility configuration method.

Accordingly, a process is implemented by combining units of operation to improve the productivity, the process is configurable or reconfigurable depending on a product, and the processing time and the facility cost of the process are reduced, which optimizes the productivity.

According to production ontology, by combining facilities, operations, and the like as a module to facilitate optimization and seamlessly clearly showing objects of line designing, a flexible configuration and planning method can be achieved.

Hereinafter, the technical idea of the present invention will be described in more detail using embodiments.

[First Embodiment]

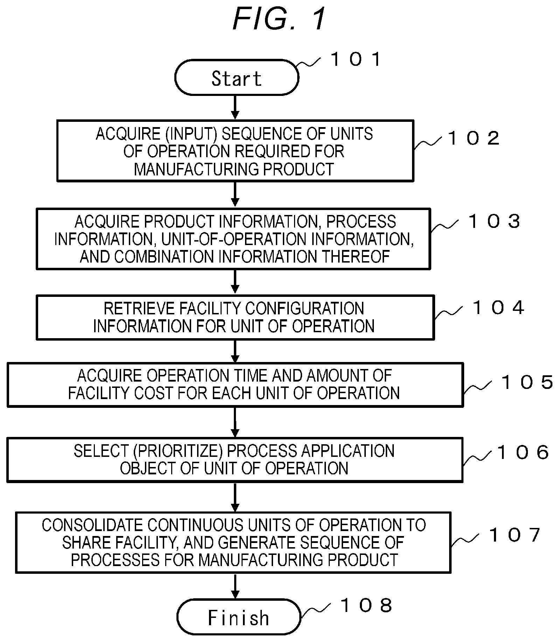

FIG. 1 illustrates an example of a flowchart of the present invention. FIG. 1 illustrates the summary of determining a process facility and a process flow, that is, processing configuring a line through a sequence of operations of manufacturing a product.

In the flowchart, the subject of the processing is a computer. The start (Step 101) and the finish (Step 108) of processing are clearly shown.

The computer acquires a sequence of units of operation required for manufacturing a product (Step 102). This step is an input in computer processing. That is, the input is product information including a parts structure and a sequence of operations. It is assumed that the operation corresponds to one simple action such as placement on a table, attachment of parts, or screw fastening in case of product assembly. However, this determination method is not necessarily uniquely determined. For example, movement may be distributed stepwise. However, in the present method, regarding a unit of operation, it is assumed that operations (operation names or symbolic names for operation) are treated as a unit so as to be uniformly matched in a range of manufacturing a desired product. For example, regarding a unit of operation of movement, movement distributed into two steps is designated as operations including movement 1 and movement 2, and a sequence of operations are designated as different units of operation including movement, movement 1, and movement 2.

Product information, process information, and unit-of-operation information are acquired. This step is to acquire a combination of three pieces of information including product information, process information, and unit-of-operation information (Step 103). These information are generally stored in a storage medium such as a database. Step 103 clearly shows a retrieval object.

Facility configuration information is retrieved for the unit of operation (Step 104). For example, in order to carry a part, a conveyer or a robot is a component, and a worktable on which a part is placed is also a component. For an operation of screw fastening, a robot and a driver hand (a hand of the robot) are components. On the other hand, a facility of a dedicated screw fastening equipment may be used, and there is a variation in the configuration. In addition, even when the configuration is only one robot, various manufacturers have many models capable of implementing equivalent operations of parts, and all of the facility configurations are candidates. The facility configuration for implementing an operation includes one or more facility elements. At this time, a worker is also considered a facility element, and the operation content and action of the person are determined depending on the component.

Regarding the facility configuration that is retrieved for the unit of operation, an operation time and an amount of facility cost are acquired (Step 105). The operation time is determined depending on a set of facility configurations, and is also determined depending on facility elements. Even when a part is carried, the processing time varies between movement by a conveyer and movement by a robot, and the movement by a robot also varies depending on the performance. The amount of money also varies depending on a facility element. In addition, as the amount of facility cost, simply, the purchase amount (price) of a facility can be used, but an evaluation value in financial accounting and management accounting, for example, a manufacturing cost such as an operating cost of a facility or an asset value may be used.

In Step 106, a facility configuration used in the process is selected according to the operation time and the amount of facility cost acquired in Step 105. This step is to prioritize the facility configuration as a candidate for optimizing the line configuration instead of selecting one configuration.

In this step, a desired combination of facilities can be narrowed down or selected based on the combination record information from candidates of combinations of facilities configuring each of the units of operation.

This step facilitates the optimization of the line configuration from the viewpoint of consolidating continuous operations into a process and acquiring the processing time of each process and the amount of facility cost of the manufacturing line, and the minimum processing time or the minimum amount of facility cost in the unit of operation does not mean the processing time in the manufacturing line. By sharing a facility, the amount of money is reduced, and even when only the processing time in a specific operation is short, the processing time such as cycle time in the entire manufacturing line is not necessarily reduced. This problem needs to be solved by the optimization of the manufacturing line. However, a facility configuration where the processing time is long and the amount of money is large cannot be an optimum component of a process for the manufacturing line. Accordingly, it is useful to narrow down candidates for optimization calculation by ranking and prioritizing options based on the processing time and the amount of money because enormous calculation of combinations of facility elements are not necessary.

Continuous units of operation are consolidated to share a facility, and a sequence of processes for manufacturing a product is generated (Step 107). Continuous operations can be consolidated into one process as long as they can share a facility element during the operations. For example, as long as continuous operations can be executed using one robot and can be consolidated into one process, the facility can be this single robot. Note that, assuming that it is desired that the processing time in all of the processes of the manufacturing line, that is, the cycle time is minimized or is a predetermined reference time or shorter, even if a facility can be shared, it is necessary to use different processes. This situation is solved by optimizing the line configuration and creating a formula using an objective function and a constraint condition.

Hereinabove, the summary of the basic processing of the present invention has been described.

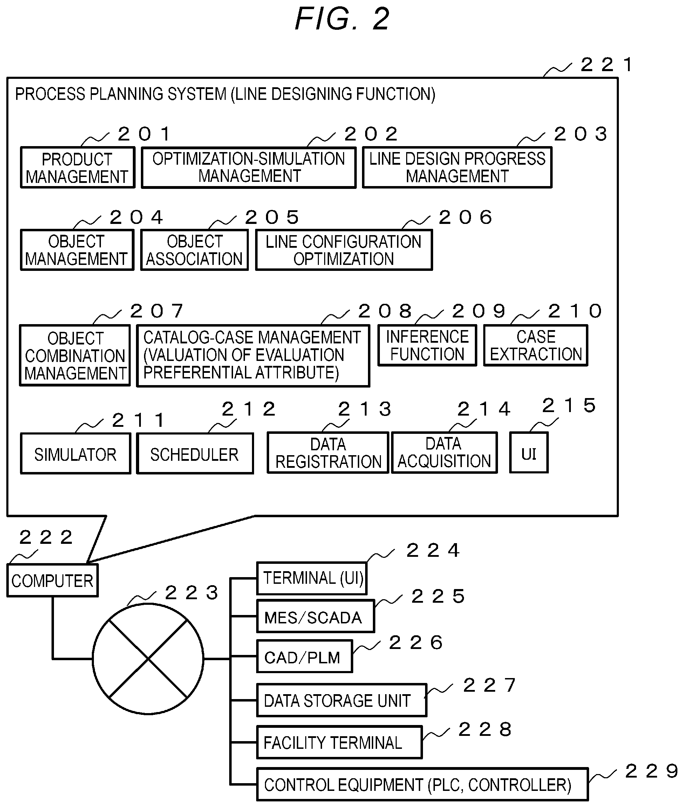

Using FIG. 2, a functional configuration for processing in a process planning device according to one embodiment of the present invention will be described.

The processing content illustrated in FIG. 1 can be implemented through processing of one or a small number of programs. However, an object of the present invention to be achieved by the present invention is to provide a process planning device for planning a line. Accordingly, the functional configuration of FIG. 2 illustrates functions required as the process planning system.

A process planning system 221 is a system for a facility configuration of processes of a manufacturing line from parts structure information of a product and a configuration of the manufacturing line to acquire a process flow (the order of the processes). Regarding the configuration of the product, processing such as acquisition or registration of data is executed by a product management function 201.

An optimization-simulation management function 202 and a line design progress management 203 are functions of managing the progress of process planning and the execution of computer processing or the like. The processing is a method of setting objects of things configuring the manufacturing line and relations therebetween, the objects including a product or operation, a facility element, a cell (process facility), a process, a process flow, and a schedule defined as classes in the production ontology. The functions manage generation and association of the objects and manage application processing used for the management.

An object management function 204 and an object association function 205 are functions of generating and setting the objects of the things configuring the manufacturing line and relations between the objects.

A line configuration optimization function 206 is a processing function particularly in Step 107 of FIG. 1 but may be considered a function of the entire flowchart of FIG. 1. In addition, the optimization process is implemented by a solver or an algorithm such as mixed-integer programming (MIP) or constraint satisfaction problem (CSP). In FIG. **2,** the optimization process is not particularly divided and illustrated, and the present function 206 may be interpreted to include the solver and the algorithm above.

An object combination management function 207 is primarily a function of managing a combination of a product or part, a unit of operation, and a facility element. Further, the object combination management function 207 also manages the objects of the things configuring the manufacturing line, particularly, a relationship between objects of different classes.

A catalog-case management function 208 mainly manages data by using a product or part, a unit of operation, and a facility element as a standard, and generally corresponds to a catalog book or a resource or database called a catalog database. In the production ontology, an object such as a process and a process flow in terms of a combination of cells or operations can also be cataloged and standardized. For use in the line design, that is, retrieval or the like, quantitative valuation for prioritization (the processing time, the amount of money, and the like) is also possible.

An inference function 209 is a function of deriving another object associated with one object. In general, the inference function 209 is a function such as logical inference processing in the computer technology and the science.

A case extraction function 210 is a function of extracting objects that are the results of line designing and a relationship therebetween as cases. For example, the case extraction function 210 extracts a set of an operation, a cell, a facility element, and a part related to the process.

A simulator 211 and a scheduler 212 are applications used for generating a production plan in response to the obtained line configuration or an order or demand of a product or for productivity evaluation.

A data registration function 213, a data acquisition functions 214, and an UI 215 are functions for allowing a main system 221 mounted in a computer 222 to transmit and receive data to and from an external equipment, and the UI 215 is an abbreviation of a user interface and is a function for receiving data input particularly from a user and displaying the data on a screen to the user.

The computer 222 is connected to a network 223 or communication means with an external computer or a data acquisition or output device and can transmit and receive data. Examples of the external equipment include a computer terminal (UI) 224, a production management system of MES/SCADA 225 (Manufacturing Execution System/Supervisory Control And Data Acquisition), a designing system of CAD/PLM 226 (Computer-Aided Design/Product Lifecycle Management), a data storage unit 227, a facility terminal 228, a control equipment (PLC, controller) 229. The facility terminal 228 or the control equipment 229 is an equipment for directly transmitting and receiving data to and from a facility of a manufacturing floor, and refers to communication and data transmission and reception between devices or machines called IoT (Internet of Thing). 227 may represent a database.

Hereinabove, the summary of the functional configuration for line designing in the process planning device in FIG. 2 has been described.

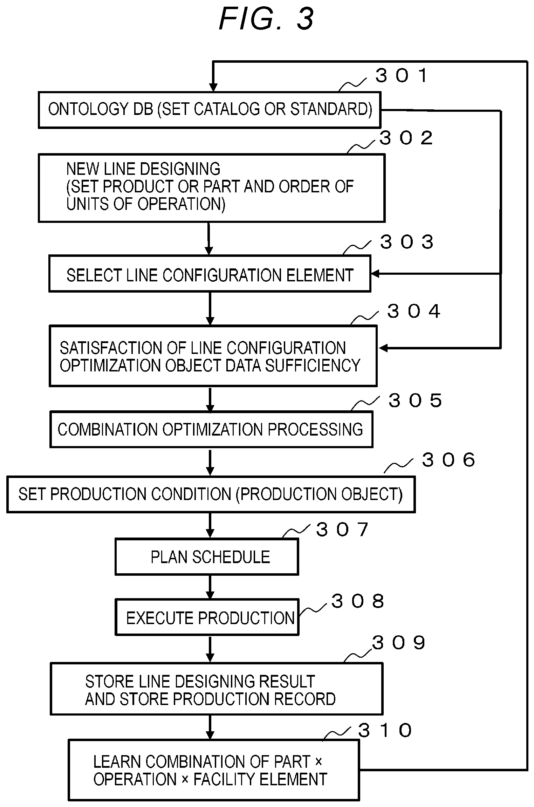

A method of determining a process facility and a process flow through a sequence of units of operation for manufacturing a product in the present invention will be described in accordance with steps of a flowchart of FIG. 3. In particular, a product or part, a unit of operation, a combination of facility elements, a process facility where a facility element is shared, and a line configuration will be described using a specific example.

On the assumption of the processing start of FIG. 3, first, a catalog or standard is set as a ontology DB (Step 301). An object to be set as the catalog or standard is a combination of facility elements that execute a unit of operation on a product or part.

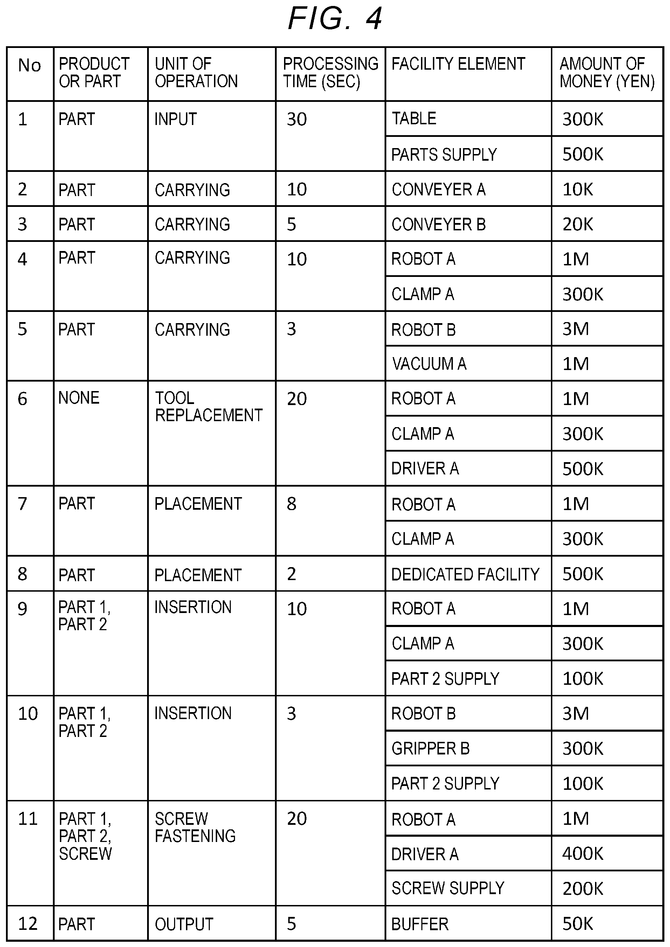

FIG. 4 is a diagram illustrating examples of combinations of products or parts, units of operation, and facility elements.

Regarding the product or part, the name of the part is shown as "Part". However, a name representing a structure or function in a product structure, for example, "Case", "Support", or "Cover" may be used, and a name such as "Vacuum cleaner" or "Cleaner" may be considered as a product name. Further, for example, the product name may be defined in more detail. For example, a model such as a robot cleaner "RV-X10J" or "minimaru" may be set to facilitate to retrieve a manufacturing method from the viewpoints of a function, a structure, a size, a weight, and the like. A name of a product and a method of creating the name have no relationship unless they are intendedly implicated or associated with each other, and this relationship is necessary for managing a sequence of units of operation.

A name is given to a facility element. In FIG. 4, "Conveyer A", "Robot A", and other functional names are shown. For example, a model "CMZ05-01" manufactured by Company A is set for a robot. For retrieval regarding a name or performance, it is assumed that an attribute is appropriately set for a database table and the retrieval is facilitated by conversion a character string or the like. It is important that the function or performance is specifically accurate. When a facility is manufactured by the own company, a unique name may be determined in terms of a model instead of setting, for example, a facility development number, a facility investment number, or an asset number as an exclusive substance.

Regarding the unit of operation, a user needs to manage a name. In this case, it is required to generate the same name as an operation name during the manufacturing of a product, to make a correspondence such that the retrieval can be accurately executed, or to make a rule such that an intended operation sorting range can be retrieved. Ordinarily, a method of creating a name of an operation is determined from the viewpoint of an action or modification of a part, but effort is required to encode the operation itself. For example, there is means of using an operation time management method of PTS (Predetermined Time Standards). Alternatively, unification of terms is attempted within a range of a product, a manufacturing line, or a business.

In the present specification, the description will be continued using terms illustrated in FIG. 4. No. is attached to the combination. No. 1 represents a configuration using a "Parts Supply" equipment on "Table" for "Input (load to a line) of one "Part". The processing time is 30 seconds, and regarding the amount of money, "Table" is 300 K yen, that is, 300,000 yen, and "Parts Supply" equipment is 500 K yen. In the field of the amount of money, M represents million, and for example, 1 M yen represents one million yen.

The manufacturing line is designed or the line configuration is determined depending on an operation of manufacturing a product. Therefore, by using a product or part and a unit of operation as retrieval keys, facility elements are selected. That is, in the next step of FIG. 3, a product or part and the order of units of operation are set in new line designing (Step 302).

A line configuration element is selected (Step 303). Simply, a unit of operation corresponding to the name of the unit of operation for manufacturing the product is retrieved from the data storage unit or the database to acquire a combination of facility elements.

At this time, the unit of operation can be implemented using various combinations of facility elements, and it can be easily assumed that the number of facility models having equivalent functions is pretty large in consideration of the number of vendors. Accordingly, when a short processing time and a low cost represents high productivity, the number of combinations may be narrowed down based on the processing time and the amount of money to reduce the calculation cost and to facilitate the selection. Note that it is necessary to check whether or not a facility of a unit of operation required for manufacturing the product is present, and when a deficient unit of operation is not present in the database, this unit of operation is additionally registered. Hereinabove, Step 304 has been described.

Combination optimization processing is executed (Step 305). Hereinafter, optimization of the line configuration will be described using an example. In the example, a situation where one combination of facility elements is specified for each of units of operation is assumed. When multiple combinations of facility elements are present for one unit of operation, optimization may be executed for each of the combinations to acquire a combination where objective functions are optimum.

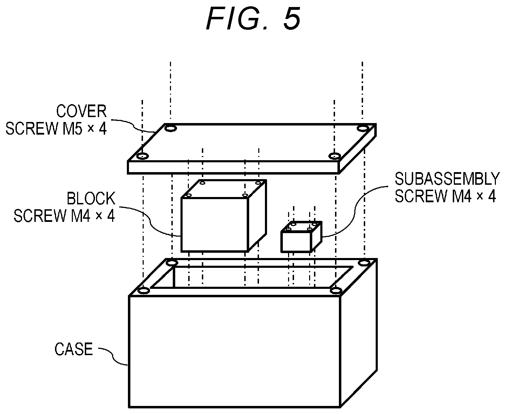

FIG. 5 illustrates a product for description. The product has a structure where a box is packed with parts and is covered. For example, a rechargeable battery of an electric vehicle has a similar structure. A block is inserted into a case and is fastened with four screws M4. In addition, a subassembly is inserted and is fastened with four screws M4. Next, a cover is placed and fastened with four screws M5.

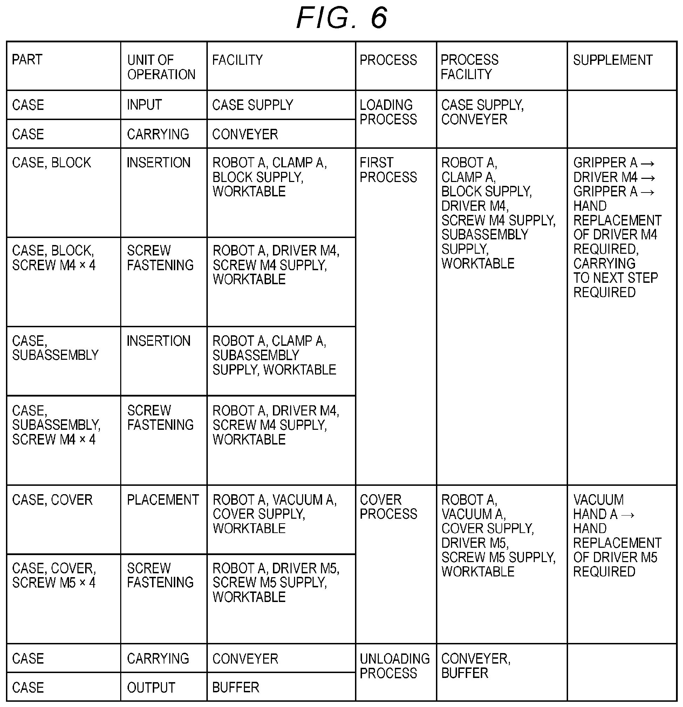

FIG. 6 illustrates combinations of products or parts, units of operation, and facility elements and the results of process facility configurations, that is, the results of line configuration optimization. First, a combination of a product or part, a unit of operation, and a facility element will be described.

First, a case is input (loaded) into a manufacturing line. A case supply equipment is used.

The case is carried to an assembly position using a conveyer.

A block is inserted into the case. A robot A to which a gripper A is attached is used. A supply equipment is necessary.

The block is fastened with screws. A hand of the robot A is a driver M4, and a screw supply equipment is necessary for the screws.

A subassembly is inserted. The subassembly is fastened with screws. The screws are represented by **M4.**

A cover is placed on the case. The robot A is used, and a vacuum hand A is used as the hand. A supply equipment is necessary.

The cover is fastened with screws **M5.** This assembly is completed as a product.

The product is unloaded (carried) using a conveyer, and is output to a buffer.

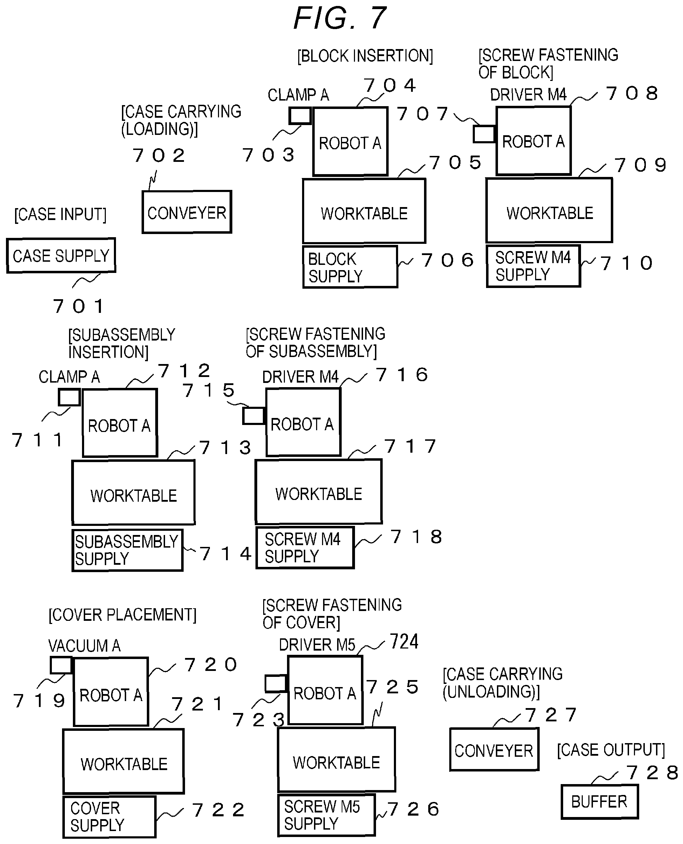

FIG. 7 illustrates a configuration of facilities for each of the operations. Here, simply, an illustration where facility elements required for implementing the operation are placed using quadrangles having different sizes is illustrated. In the drawing, for each of the units of operation, an operation name is written in square brackets of the upper left side, and part names and the like are also attached for clarification.

In FIG. 7, all of the block insertion, the screw fastening of the block, the subassembly insertion, the screw fastening of the subassembly, the cover placement, and the screw fastening of the cover share the robot A and the worktable, and a clamp A (703, 711), a driver M4 (707, 715), a vacuum A (719), a block supply (706), a screw M4 supply (710, 718), a subassembly supply (714), a cover supply (722), and a screws M5 supply (726) are separately used. As the robot A, six substances 704, 708, 712, 716, 720, and 724 are illustrated. In this case, however, only a single substance of a robot may execute the operation, and all of substances are different robots having a model name of the robot A. The same also applies to the worktable. When the substances are the same, operations implemented by the substances are executed in the same process. When the substances are different, operations implemented by the substances are executed in different processes.

A basic way of thinking of the line configuration optimization will be described.

For example, it is assumed that robots of the same model are used for two operations. It is assumed that the operations are executed in tandem such that the second operation is executed after the first operation (the parallel execution is prohibited). Assuming that the operation time of the first operation is 10 seconds and the operation time of the second time is 20 seconds and the two operations are executed using one robot, 10 + 20 = 30 seconds, which is the cycle time of the process, that is, the manufacturing line. Assuming that the price of the robot is 1 M yen, the cost of the process is 1 M yen because the single robot is used. These two operations are consolidated into one process. This plan is the first plan of the manufacturing line configuration.

Assuming that the two operations are implemented by different robots, and two different processes are separately executed. The operation time of the first process is 10 seconds, and the operation time of the second process is 20 seconds, which is the cycle time. Thus, the cycle time of the manufacturing line is 20 seconds. Note that, since two robots are required, the cost is 2 M (2 × 1 M) yen. This plan is the second plan of the manufacturing line configuration.

In the second plan, the processing time of the manufacturing line, in particular, the cycle time is short. However, in the first plan, the cost is low. This way, the configuration where the facility elements are shared to optimize the facilities configuring the processes and the process flow, that is, the sequence of the processes such that the processing time is minimized or the cost is minimized is called the line configuration optimization. A representation such as creating a formula using any of the cycle time or the cost as an objective function and using one of them as a constraint condition can be devised.

FIG. 6 collectively illustrate examples where an array of units of operation is consolidated into one process to configure a line. It can be said that the entire configuration is a process flow including four processes and is suitable for cost reduction of the facilities rather than the cycle time.

Input and carrying are consolidated into a loading process.

In the assembly, the insertion and the screw fastening of the block and the subassembly are consolidated into a first process. The process facilities include the robot A, the clamp A, the block supply, the driver M4, the screw M4 supply, and the worktable. The worktable, the robot A, and the driver M4 are shared. As the operations, the replacement of the clamp A and the hand of the driver M4 and the operation of carrying to the second process are required. The additional operations are determined along with the determination of the process.

The second process is a process of placing the cover and fastening the cover with screws. The vacuum A of the robot hand and a driver M5 cannot be shared for the operations of the first process, and the cycle time is distributed into two processes. As a result, the second process is separated from the first process.

Carrying and output are consolidated into an unloading process.

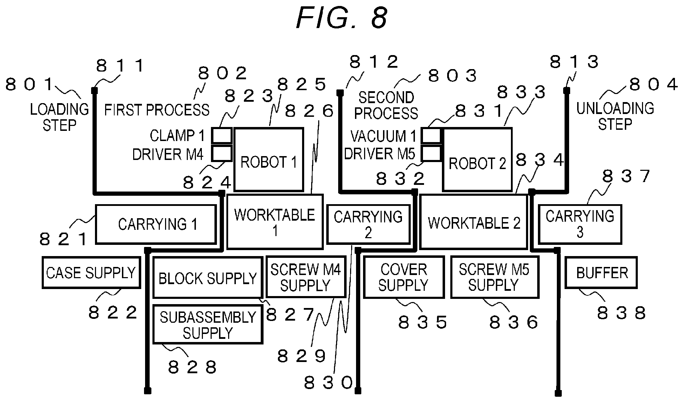

FIG. 8 illustrates an illustration of the line configuration of FIG. 6. In order from the left of FIG. 8, the loading process 801, the first process 802, the second process 803, and the unloading process 804 are arranged, and are separated by boundaries 811, 812, and 813.

Assuming that the configuration of FIG. 8 is the original line configuration, the first process 802 and the second process 803 are consolidated, that is, a robot 1 (825) and a robot 2 (833) are consolidated into one robot and a worktable 1 (826) and a worktable 2 (834) are consolidated into one worktable, and the robot hand and the supply equipment can be shared in one process. Alternatively, the operations of the block and the subassembly in the first process 802 can also be separated, and further the screw fastening can also be separated. The cycle time and the cost of the facility are treated as the problem of the combination of the separation of the processes and the sharing of the facility. The robot can implement various operations by replacing the hand. However, in a case where the production volume is large, when many robots are used and processes are separated to configure a manufacturing line from the viewpoints of a hand tool equipment, a supply equipment, a carrier, and the like, the cost is reduced.

Note that, simply when the cycle time is minimized or the cost is minimized, the number of processes and the number of units of operation are one. For example, when the upper limit of the cycle time or the cost per process is constrained, the number of processes can be controlled, but it is difficult to set a constraint condition. In this case, the number of processes may be set as a constraint condition.

In addition, in the above description, physical structures and placement of the facility elements are not mentioned but are unnecessary limitation in the above-described problem of the line configuration optimization, that is, "the manufacturing line is configured by consolidating continuous operation elements into one process and sharing facility elements related to the unit of operation in the process such that the cycle time or the cost is minimized". When there is a condition regarding the structure and the placement, a formula may be created using a constraint condition representing the condition.

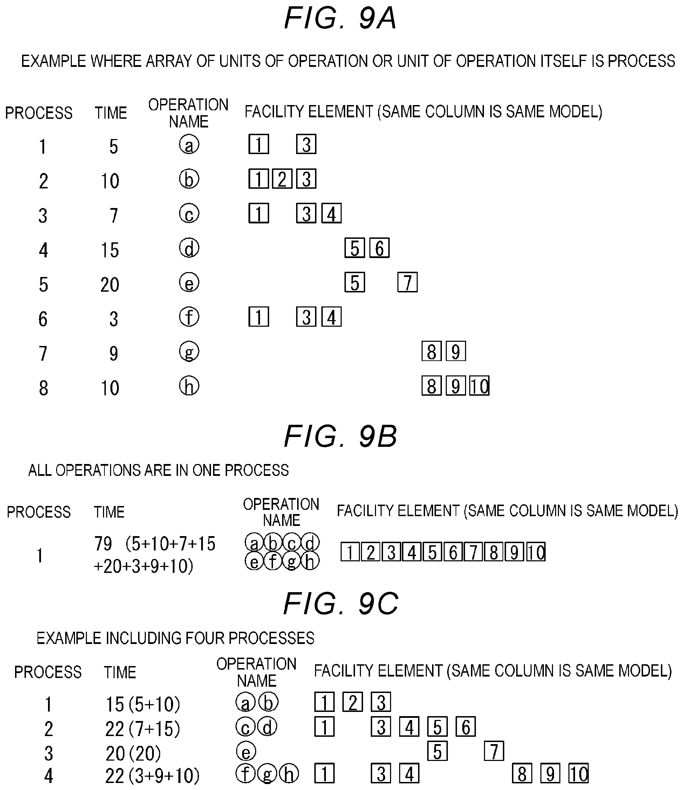

The processing of the line configuration optimization will be organized using FIGs. 9A, 9B and 9C.

An array of units of operation is shown in Item (a) "EXAMPLE WHERE ARRAY OF UNITS OF OPERATION OR UNIT OF OPERATION ITSELF IS PROCESS". The column consists of eight units of operation, and symbols a to h are assigned to the operation names. The time represents the processing time, and the unit is second. The number of sorts of facility elements is 10, and facility elements required for the operation are arranged in the same row. For example, facility elements 1 and 3 are used for the operation a, facility elements 5 and 6 are used for the operation d, and facility elements 8 and 9 are used for the operation g. The facility elements having the same number are facility elements of the same model. In the drawing, column positions are aligned. Assuming that each of the units of operation is one process, the process flow includes eight processes, and the cycle time of the manufacturing line is 20 seconds in the fifth process. Assuming that the cost of each element is equally 1 M yen, the amount of facility cost is 20 M yen because the number of elements is 20.

Assuming that the item (b) "ALL OPERATIONS ARE IN ONE PROCESS", all of the facility elements are shared if the operations are partially repeated, the total number of the facility elements is 10, and the total amount of facility cost is 10 M yen. The cycle time is 79 seconds.

In the item (c) "EXAMPLE INCLUDING FOUR PROCESSES", a process flow is configured by consolidating continuous operations such that the cycle time is about 20 seconds. The cycle time of the manufacturing line is 22 seconds of the process 2 and the process 4. The total number of facilities is 16, and the amount of facility cost is 16 M yen.

In FIGs. 9A, 9B and 9C, for example, a combination of facilities having a predetermined threshold or less can also be selected based on the calculated time or the operation time and the amount of facility cost or the facility elements with numbers in boxes in FIGs. 9A, 9B and 9C or based on the amount of money associated with the facility elements with numbers in boxes in FIGs. 9A, 9B and 9C.

Hereinabove, the method of determining the line configuration by determining the facilities of the process and the process flow based on the time and the amount of money of facility elements in a combination of units of operation and facility elements has been described. When a formula is created as the line configuration optimization problem, examples of representations are as follows.

<Objective>

[Numeral 1]

$$\min z = \alpha c + \beta t$$

<Subject_to>

[Numeral 2]

$$v^o_{o,p} \in \mathbb{Z}_2$$

[Numeral 3]

$$1 = \sum_p v^o_{o,p}$$

[Numeral 4]

$$n^o_o \in \mathbb{Z}_2$$

[Numeral 5]

$$n_o^o = \sum_p a_p^o v_{o,p}^o$$

[Numeral 6]

$$n_o^o \leq n_{o+1}^o$$

[Numeral 7]

$$v_{p,e}^e \in \mathbb{Z}_2$$

[Numeral 8]

$$\sum_e v_{p,e}^e \geq v_{o,p}^o$$

[Numeral 9]

$$\sum_e v_{p,e}^e \leq 1$$

[Numeral 10]

$$\sum_e v_{p,e}^e \geq v_{o,e}^o$$

[Numeral 11]

$$\sum_e v_{p,e}^e \leq 1$$

[Numeral 12]

$$e_{p,o}^o, r_{p,o}^o \in \mathbb{Z}_2$$

[Numeral 13]

$$e_{p,o}^o + r_{p,o}^o = v_{o,p}^o + 2 \times v_{o+1,p}^o$$

[Numeral 14]

$$c_p = \sum_e a_e^o v_{p,e}^e$$

[Numeral 15]

$$c = \sum_p c_p$$

[Numeral 16]

$$t_p = \sum_o a_o^t v_{o,p}^o + \sum_e a_e^t v_{p,e}^e + \sum_o a_{ex}^t e_{p,o}^o$$

[Numeral 17]

$$t \geq t_p$$

Here,

[Numeral 18]

$$v^o{}_{o,p}$$

represents selection of a unit of operation.

[Numeral 19]

$$n^o{}_o$$

represents a process number of the unit of operation.

[Numeral 20]

$$v^e{}_{p,e}$$

represents selection of a facility element.

[Numeral 21]

$$e^o{}_{p,o}$$

represents a choice variable between units of operation.

[Numeral 22]

$$r^o{}_{p,o}$$

represents a modulo between units of operation.

The suffix o represents a unit of operation, p represents a process, e represents an index of a facility element, a superscript represents an object (a unit of operation or a facility element) belonging to a variable, a subscript represents an index, and arrangement of two characters represents direct product.

Hereinabove, the combination optimization processing of Step 305 of FIG. 3 has been described.

Here, assuming that a line is designed, when the next actual production is executed, the productivity is evaluated. Alternatively, production is prepared. A production condition (production object) is set (Step 306). A desired product is a product that is an input of line designing, and the production volume thereof is to be determined. In addition, a schedule is planned, and numbers (serials) of products for determining individual schedules are generated.

A schedule is planned (Step 307). By line designing, a process flow and the processing time (cycle time) of each process are planned, which are master information for scheduling. Using an algorithm such as job shop scheduling or leveling, the production schedule can be determined, and the achievement of the delivery time or the load of production can be evaluated. In addition, in line designing, a product is determined to configure a line. By installing processes for different products and the same facility configuration, a schedule plan of mixed model manufacturing can also be evaluated.

Production is executed (Step 308). Even when a manufacturing line is designed to make a production plan, facilities are prepared. In some cases, preparation such as new installation or procurement of parts for manufacturing a product is necessary. The present flowchart is a flowchart of processing related to line designing, particularly, information processing for configuring a manufacturing line from an operation array for manufacturing a product.

In the preparation of production, actual actions of facilities, in particular, robot path planning, the control content of PLC, and the actual processing time that is spatially or structurally determined are clarified. Further, in the actual production, there may be a change in the control content, optional parts of partial facilities, or in some cases, a facility element itself.

Accordingly, by executing production, the line designing result is stored, and a record of production is stored (Step 309). At this time, the actual value of the processing time can be seen, and the facility configuration used for the actual production is clarified. These information can be reflected on an ontology DB in Step 301. 309 can also be called combination record information of facilities.

Accordingly, a combination of a product or part, a unit of operation, and a facility element (part × operation × facility element) is registered in the DB as ontology (Step 310). Since record data is treated, there is a variation in operation time in the actual operation. Therefore, statistical processing is required, and a term such as learning is used. In addition, this processing includes maintenance of data in the database, for example, data overwriting (update) or newly combining with another name of unit of operation or facility element in consideration of consistency with existing registered items.

In the registration of the database, addition of a facility model of a manufacturer is the simplest case. However, it is also important to reflect consideration of an engineer in production. By improving production or devising process planning, a new facility configuration may also be conceived. Such examples will be described below.

The description will be made focusing on the first process 802 in FIG. 8. The first process 802 is a process consisting of four units of operation including the insertion and screw fastening of the block and the insertion and screw fastening of the subassembly.

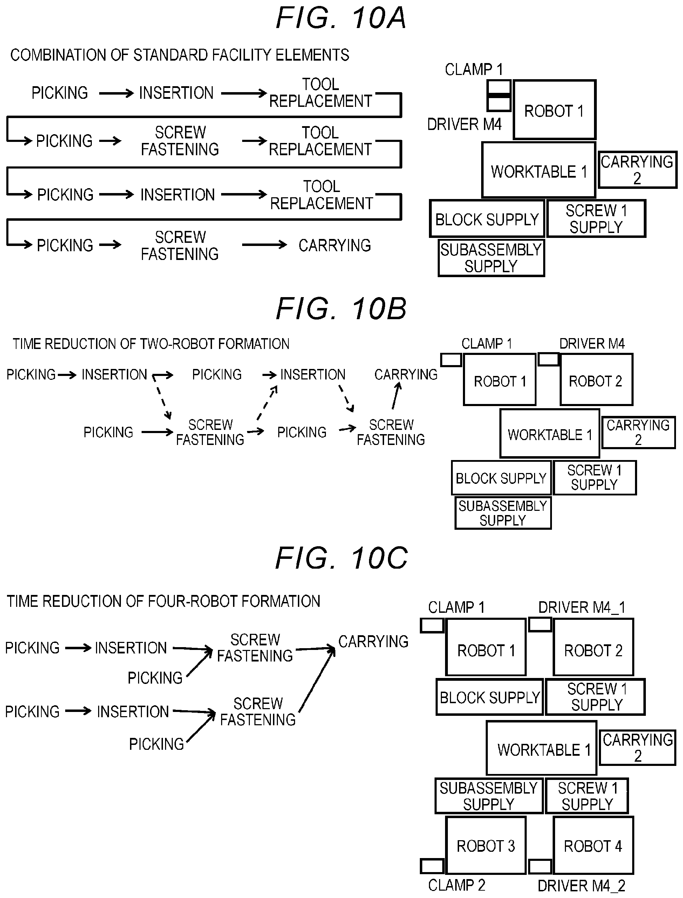

FIGs. 10A, 10B and 10C illustrate the operation content of the first process 802 of FIG. 8 and an operation content and a facility configuration of the process after the productivity improvement. The item (a) is the processing content of a process obtained by combination of standard facility elements. A robot 1 picks the block, inserts the block into the case, replaces the tool, picks screws, fastens the screws, replaces the tool, picks the subassembly, inserts the subassembly, replaces the tool, picks the screws, fastens the screws. The assembly is carried to the next process. The individual operations are continuous without being repeated, and the processing time is the total sum of the operation times. Even when the number of the units of operation is four, the picking and the tool replacement regarding the parts supply are required.

When four units of operation are processed using two robots, the robots handles the clamp and the driver, respectively, without replacing the tool. In addition, when the two robots are used, while one robot is executing the picking, the other robot can proceed the assembly operation itself. As shown in the item (b) "TIME REDUCTION OF TWO-ROBOT FORMATION", while picking and inserting the block, the screws are picked and screwed. In this case, the processing time of the picking, the insertion, the screw fastening, the insertion, and the screw fastening is about half of that of the item (a).

Further, when the number of robots is doubled to execute the assembly of the block and the subassembly in parallel, the condition is as shown in the item (c) "TIME REDUCTION OF FOUR-ROBOT FORMATION". In this case, the processing time is the total sum of those of the picking, the insertion, and the screw fastening, which is about 1/4 the processing time of the item (a).

Each of the items (a), (b), and (c) shows the facility configuration as in the illustration.

When the array of the units of operation illustrated in FIG. 6 is consolidated, the process is as shown in the item (a) above. When the unit of operation is "block assembly + subassembly assembly" and the facility configuration is as shown in the configuration of FIG. 10C, the processing time of the unit of operation can be made significantly short. In order to obtain this unit of operation in the line configuration, the unit of operation "block assembly + subassembly assembly" is input during the input. Alternatively, when the insertion and the screw fastening of the block and the subassembly as the parts are continuous in the array of the units of operation, the units of operation are retrieved and acquired.

This method can be normalized as a configuration method of reducing the processing time to 1/n by installing n facility elements in parallel. Therefore, it can be seen that, by setting the number of parts to be processed, a combination of a product or part, a unit of operation, and facility elements where the number of facility elements is increased by the set number to adjust the processing time can be obtained.

As described above, when the operation content of the process is newly considered, a unit of operation is newly determined, a combination with facility elements is determined, and this combination is registered in the database of the production ontology to be usable for the line configuration.

Hereinabove, Step 310 of FIG. 3 has been described.

Hereinabove, the line designing method illustrated in the flowchart of FIG. 3, in particular, the method of determining the process facility and the process flow has been described.

The present invention relates to the method of obtaining the line configuration by determining the process facility and the process flow from the array of the units of operation for manufacturing a product. As the manufacturing line, production is represented in the information space such as CSP or digital twin DT to control the progress of the production, and the objects such as a product, parts, or facilities, the operation content such as a process flow or a process, and the time such as a plan are managed based on a set of required information configurations. In the present [second embodiment], the information configurations will be clarified. That is, the configuration of the production ontology will be clarified.

A method of acquiring the manufacturing order from product design information, for example, acquiring the processing or assembly order such as a sequence of assembly procedures or processing procedures of shape formation of a semi-finished product in machining using a function of CAD (Computer-Aided Design) is called CAPP (Computer-Aided Process Planning). This method is also called process planning in a narrow sense. In order to actually configure the manufacturing line, the line is configured such that facilities for intermediate manufacturing of a product in the line are determined to configure processes and a product is completed through the sequence of processes.

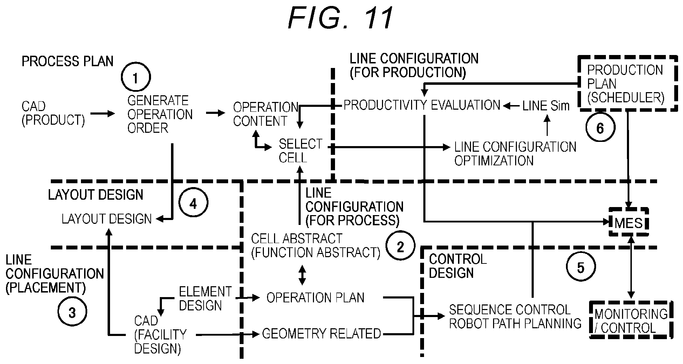

FIG. 11 illustrates the designing method for obtaining the line configuration from the product design information. The line configuration is determined from the product design information. In this case, spatial or structural items such as layout, designing of actions of machines such as control, computer implementation, and production planning for executing production in a manufacturing line are included.

In FIG. 11, circled numbers 1 to 6 indicate the order of design items. First, in the process planning, the operation order is generated. In this case, the process planning in a narrow sense, the processing of CAPP can be assumed. A cell is selected for each of operation contents. To that end, the cell is designed in advance. For new processing, a cell is designed at this time. Hereinafter, the line configuration will be described.

Here, the line configuration is classified into placement, process, and production depending on purposes. The classifications are items such as the design of the structure or facility element, the design of the operation content, and the evaluation of the productivity (such as cycle time). The cell selection represents a combination of facility elements with respect to a product or part and a unit of operation, and the determined combination of facility elements can be a cell. Note that, it is assumed that a cell is abstracted for a configuration for implementing a specific unit of operation. An assumed action is present for this cell, and is implemented by facility elements of the configuration. The line configuration for this process is the second item. In order to implement the operation of the process, the placement needs to be determined. Therefore, the line configuration (placement) is the third item.

The structure as the facility of the cell relates to the placement, and is designed to satisfy the constraint of the layout. The layout design relates to the above satisfaction, and thus is the fourth item. The facility element for implementing the operation is selected from facility elements provided from manufacturers or is designed to be dedicated.

In the above-described line configuration, the processing content and the structure of the process, that is, the configuration of the facility element is determined. Therefore, it can be seen that the configuration of the facility element is the selection object of the cell. On the other hand, a specific facility action can be designed based on the structure, the facility element, and the processing content. That is, the control design that is the fifth item progresses. The control design refers to sequence control of PLC (Programmable Logic Controller) or robot path planning.

After the cell is selected for the operation, the facility configuration of the process and the process flow are determined by the above-described line configuration optimization. As a result, the progress of the sequence of processes in the process flow is checked by a line simulator to evaluate the productivity. Further, in the obtained process flow, the order or demand of the product is assumed for production planning (scheduling) to evaluate the productivity. Through this evaluation, the line configuration is considered again, and when the performance is satisfactory and sufficient, the processing proceeds to actual production. That is, the production planning is the sixth item.

The above-described order is, for example, the order for newly preparing the production facility. Actually, however, a factory or a production facility is already present, and this facility is likely to be organized as a manufacturing line. In this case, processes are aligned assuming an existing layout.

Hereinabove, the methodology of designing the line by configuring the line from the product design has been described. Information required for handling CPS or DT that can be configured according to the line designing method will be described below. As a basic way of thinking, a line configuration and relationships between a production object, a serial of a product, and a schedule are represented by relationships between objects that are extensions of classes of information to be digitalized, and relationships between data are managed.

Class is known as a representation in the form of data in object-oriented programming or information system designing. However, in ontology, class is a substance that has a concept similar to sort and is an extension, and is organized as an item representing a substance that is held, included, or represented in common when a plurality of substances are extensions. Conversely, a thing corresponding to an extension for one class is called an instance or an individual.

A line is configured, production is planned, production is executed, and a range of reflecting record data on the ontology DB is treated. This configuration is represented as a data configuration. As a result, the line is configured, and the content of the line designing is clarified.

By using the terms in FIGS. 1 and 3 and the specification described hitherto as the classes, relationships therebetween can be configured to design a line. Examples of the classes include a product or part, a facility element, a unit of operation, an order of units of operation, a process facility configuration, a process operation, a process, a process flow, an intermediate product, an individual production object, an order or demand, a schedule, and production record data.

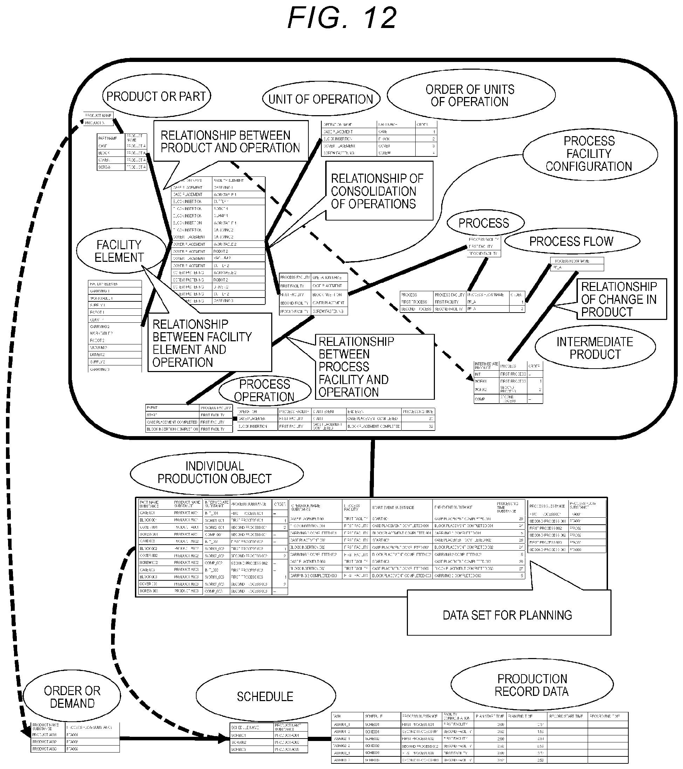

These terms are used as classes to generate objects of the classes, and relationships between the objects are generated to design a line. This procedure is illustrated in FIG. 12.

From the upper left side of FIG. 12, an object of the product or part and a sequence of units of operation for manufacturing the product are given as an input of the line configuration. Facility elements associated with the units of operation are retrieved and combined. As a result, relationships with the parts, the operations, and the facility elements are configured.

As described above in the processing of line configuration optimization, a process where the units of operation are consolidated is configured. This implies that the process facility configuration is generated and the relationship with the units of operation is configured. In addition, the process facility corresponds to the process one-on-one, and the order of the processes is the process flow.

The operation in the process relates to Step 310 in FIG. 3, and it is required that various operations in the process can be represented as illustrated in FIGs. 10A, 10B and 10C. For example, assuming that a plurality of operations proceed in tandem, the operations can be represented as a sequence. However, for example, simultaneous parallel operations are represented, the use of a state transition diagram can also be considered. This way, the class representing the process operation is present, and is associated with the process.

Through the process flow, the product can be completed. Therefore, parts undergoes any change through every process. For example, other parts may be added, or the parts are modified. The intermediate product between the processes has a relation with the order of the processes, that is, the process flow. The intermediate product also has a relation with the product or part but is not illustrated because of the insufficient space of FIG. 12.

When the production is planned after configuring the line, the order or demand that is an object of the production is assumed. Alternatively, the production plan is planning the schedule for executing the production in response to the order or demand. At this time, substance of production objects is assumed, processing dates of individual products in the process are determined. When these individual products are called serials, the product and the parts, the intermediate product, the processes, and the process flow corresponding to the processing of the product also have objects corresponding to the serial. These items are collectively called the individual production object.

The schedule is planned for the order or demand, and a schedule of the result is obtained. The production is executed according to the schedule, and the history is stored as the production record data. The production record data in the drawing includes the combination record information of the facility.

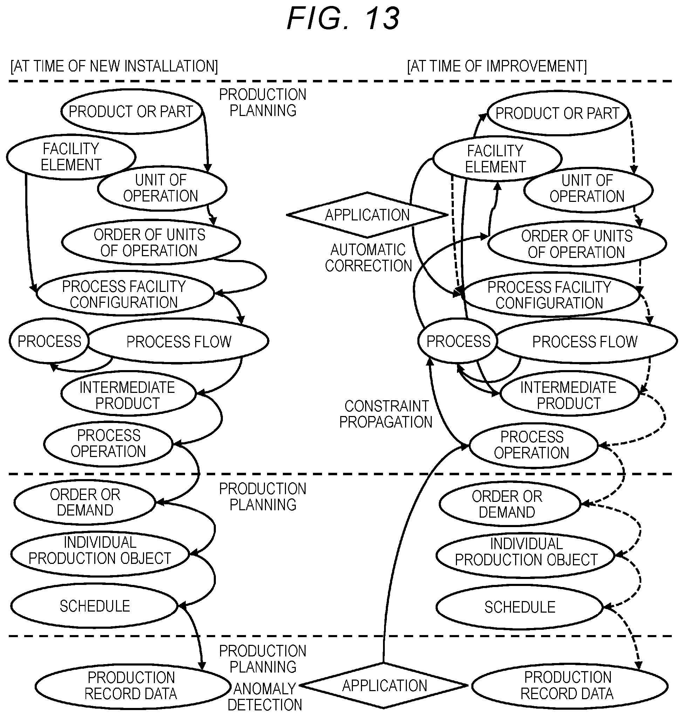

Hereinabove, the procedure of configuring the data according to the procedure of configuring the line for the product design has been described. Once the data of the line configuration is configured, by correcting the data, the situation of improving or reconfiguring the actual manufacturing line can be represented. This representation is important in CPS or DT for evaluating the productivity based on the production status and controlling the execution of production. The left side of FIG. 13 illustrates the data configuration order along the procedure of the line configuration corresponding to the new line installation of FIG. 12. The right side illustrates the order of data correction at the time of improvement.

In the left side of FIG. 13, anomaly is detected by an anomaly detection application (program) during the production execution. As a result of the determination, breakdown of a robot hand is specified. In this case, an operation item is specified based on data of the process operation, and a unit of operation and a facility element relating thereto are specified. As a result, a broken hand is clarified. This way, the anomaly is specified by propagating the relationships (sequentially following the relationships) as constraints. Accordingly, by changing the facility element to a normal hand to change the facility configuration of the process, the processing returns to the production. The above-described correction is possible by setting the relations between the classes as the relations between the objects in the production ontology.

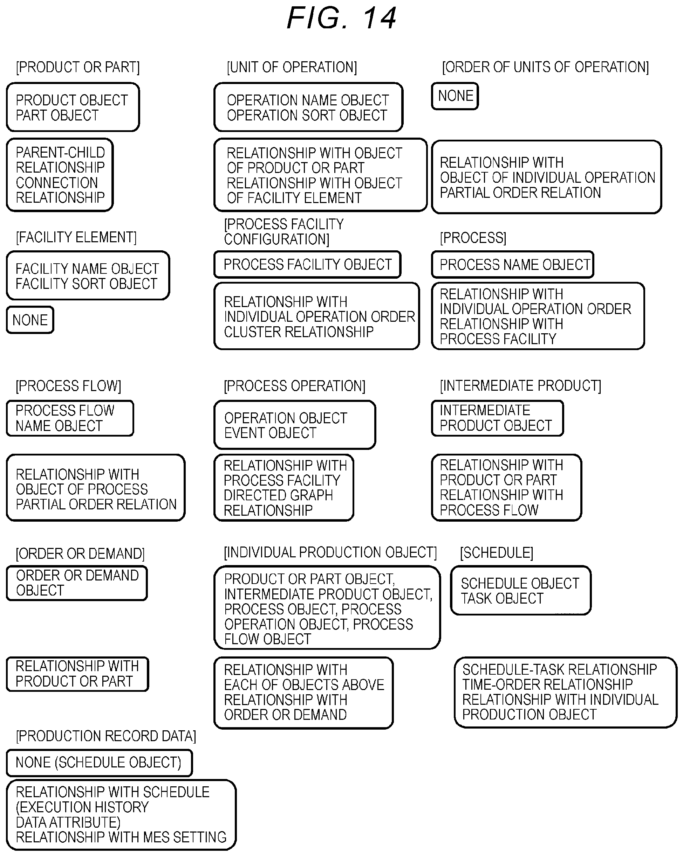

FIG. 14 illustrates a list of the classes, data items in the classes, and relationships with other classes. Class names are shown in square brackets, the upper stage shows the data items, and the lower stage shows the relationships.

From the above, the configuration of the manufacturing line is obtained according to the procedure illustrated in FIGS. 12 and 13 by generating the relations between the objects of the classes illustrated in FIG. 14. In particular, in FIG. 13, the generation of the relations represents configuring the line to function, and the correction of the relationship (including generation of an object having a relation) represents correcting or reconfiguring the manufacturing line in the information and cyber space.

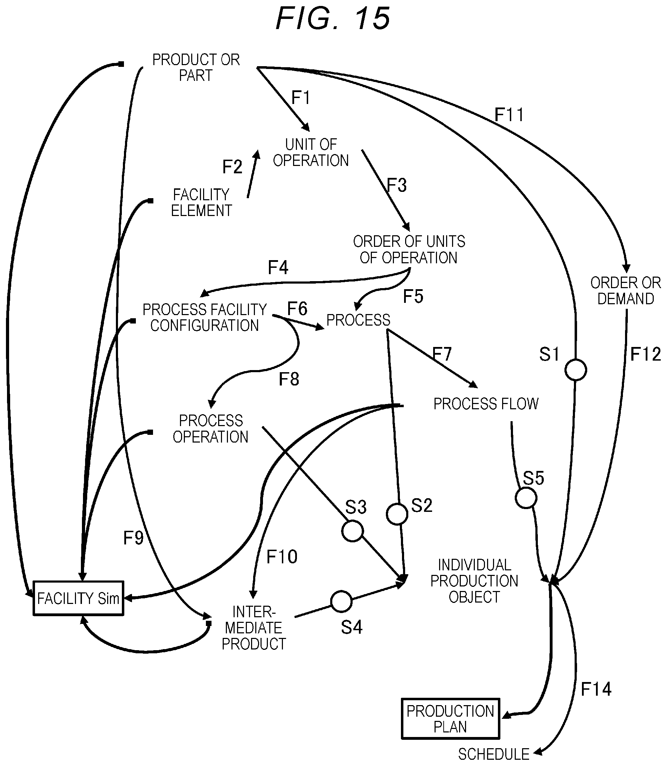

FIG. 15 illustrates the generation of the relationship between the objects in the class with an order relation (partial order relation) using arrows. The arrow is an arrow in processing of generating a relation, in a function, or in category theory in the field of mathematics. In the category theory, the object is an object. In program implementation of a computer, for example, constraint processing is implemented using a theory of information engineering or a mathematical concept. F and a number are attached to the arrow, and F is the initial letter of the function. In addition, in the generation of the individual production object, the product or part, the processes, the process operation, the intermediate product, and the process flow are serialized, and a new object is generated with reference to the original objects. A circle, S, and a number are attached to the arrow. S is the initial letter of serialize. This arrow maintains the relationship between the original objects. That is, the arrow representing the relationship is also stored. "Arrow" of the arrow between the objects generated from the arrow between the original objects is called a functor. In the category theory, a category is a collection of arrows and objects, and thus serialization represents transition from one category to another category.

In FIG. 15, a bold arrow indicates the processing for checking the evaluation of the productivity or the function of the configured manufacturing line. A facility Sim indicates a structural simulation of the manufacturing line, and checks the action or the processing time of the facility of each of the processes. The production plan evaluates the productivity according to a planned schedule for the serial of the individual production object, that is, the product or part, the process, the process operation, the intermediate product, and the process flow.

In FIG. 15, it can be said that the above-described line configuration optimization is the processing of generating the process facility configuration, the processes, and the process flow and at least partially the process operation and the intermediate product. It can be said that the production plan is the processing of generating the individual production object and executing the production planning processing to generate a schedule.

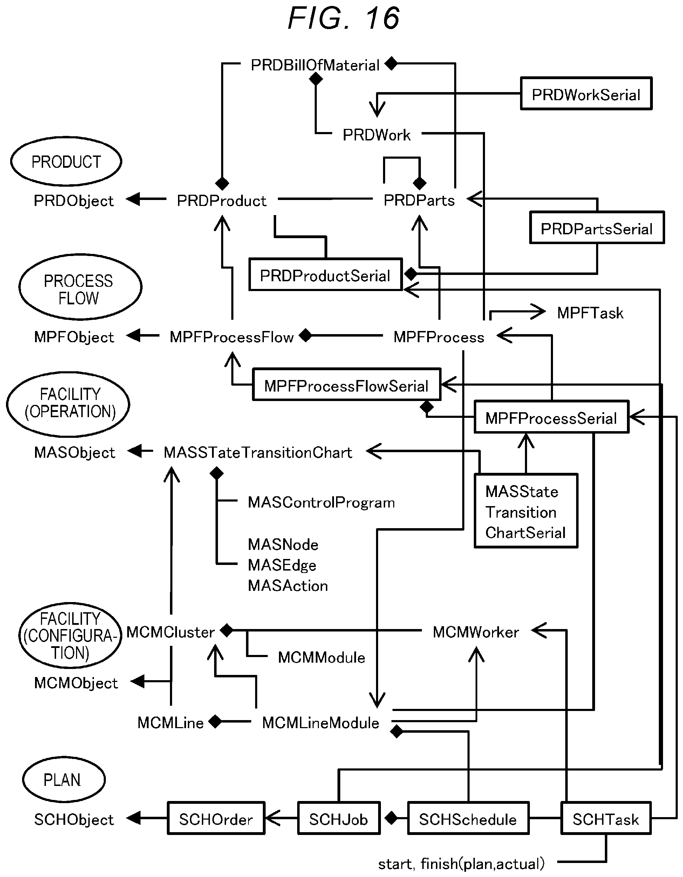

FIGS. 12, 13, 14, and 15 illustrate the objects and the relationships of the line configuration. In the present invention, a problem area of the line configuration is represented as the production ontology. In the ontology, a relationship between the classes is represented a class diagram. FIG. 16 illustrates the class diagram of the production ontology. In order to organize the objects, the objects are classified into the product, the process flow, the facility (operation), the facility (configuration), and the plan, and are assigned with prefixes such as PRD (abbreviation of product), MPF (abbreviation of Manufacturing Process Flow), MAS (abbreviation of Manufacturing Action Sequence), MCM (abbreviation of Manufacturing Cyber Module), and SCH (abbreviation of schedule) in the namespace. A class in a box is accompanied by a serial or a substance used for production planning or production execution, and a class not in a box is used for the production designing stage (production designing) such as the line configuration optimization. A triangle arrow indicates an inheritance relationship (is relationship, universality, sorting relationship), a square arrow indicates an inclusion relationship (has relationship, consolidation, mereology), a line arrow indicates only a relation, and the meaning thereof is determined depending on classes.

A relationship between the product and parts is managed by a parts list PRDBillofMaterial.

The unit of operation is shown as MPFTask. The term task is also used as SCHTask of the plan but refers to the specific processing of the process. Conversely, the task of the unit of operation refers to individual small processing parts divided from the processing of the operation. In the namespace, the terms are selectively used.

In the facility (operation), a state transition diagram MASStateTransitionDiagram is used as the description. The state transition diagram is represented by a relationship between an edge and a node, the edge indicates a transition and corresponds to an operation, and the node indicates a state and corresponds to a thing at the time of an event.

Regarding the facility (configuration), the facility element corresponds to MCMModule, and the process facility is divided into representations such as MCMCluster as a cluster of facility elements and MCMLineModule as a process facility in a line MCMLine. IF these representations have a relationship, the relationship is "the same as".

The above-described information is a set of information configurations that represents production in the information space such as CSP or digital twin DT, and represents the line configuration for controlling the progress of the production.

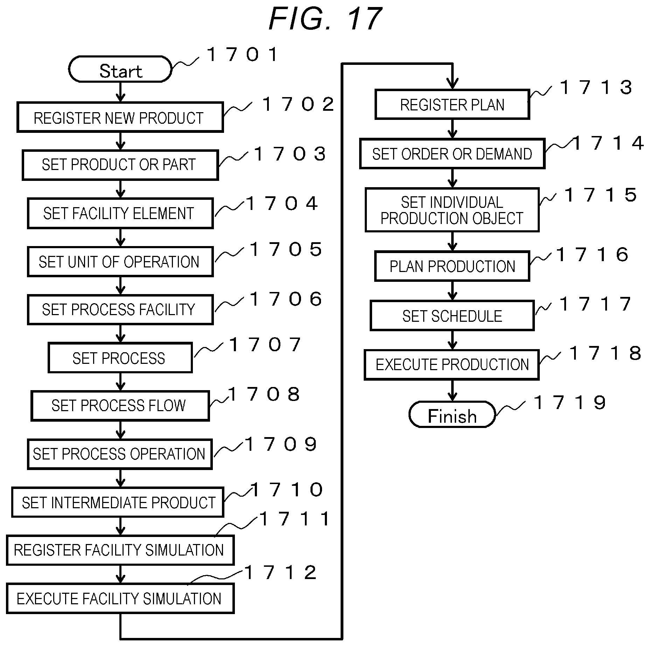

FIG. 17 illustrates an example where a method of configuring a line by directly setting objects and relations, in particular, a method of configuring a new line. The processing starts in Start 2701, a product is newly registered (Step 1702), a configuration of a product or part is set (Step 1703), a facility element is set (Step 1704), a unit of operation is set (Step 1705), a process facility is set (Step 1706), processes are set (Step 1707), a process flow is set (Step 1708), a process operation is set (Step 1709), and an intermediate product is set (Step 1710).

From the above, the line is configured. In this step, the production possibility of the line for a desired product is evaluated. Execution of a facility simulation is registered (Step 1711). The registration corresponds to the preparation and the setting. The facility simulation is executed (Step 1712). The processing can return to any of the steps depending on the evaluation result. In addition, the evaluation of the facility simulation is not essential for the next plan execution or the production execution. The description continues.

A production plan is registered (Step 1713), an order or demand is set (Step 1714), an individual production object is set (Step 1715), and production is planned (Step 1716).

The obtained schedule is set (Step 1717), and the production is executed (Step 1718). From the above, the sequence of procedures are finished (Step 1719).

Hereinabove, FIG. 17 has been described. Here, Step 1706 to Step 1708, in some cases, to Step 1710 correspond to the processing of the line configuration optimization.

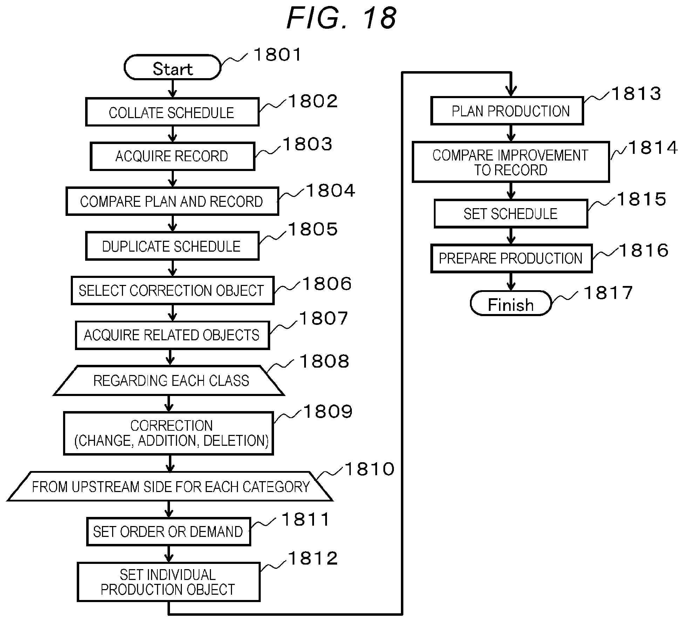

A procedure of improving the line configuration configured by the production ontology will be described using the right side of FIG. 13. This processing procedure is illustrated in the flowchart of FIG. 18. In the description of the right side of FIG. 13, the procedure starts from the anomaly detection. Here, a specific situation is not assumed.

At the time of the start (Step 1801), first, a situation that occurs is collated (Step 1802). This implies that objects related to the line configuration are specified, and actual data is acquired together (Step 1802). The data corresponds to signal data such as device data.

The plan and the record are compared (Step 1804). For example, anomaly detection is included in this processing.

Hereinafter, the processing of a case where the line configuration is partially corrected to change the plan will be described. As the processing on the cyber space, the virtual situation is configured to make a plan, and an existing plan is overwritten with the new plan.

In addition, the schedule is duplicated (Step 1805), and the correction object is selected (Step 1806).

Objects having a relation are acquired by propagating the relation between the objects (Step 1807).

Steps 1808 to 1810 is a loop, and the processing is repeated on the objects having the relation for each of the classes. The processing is the object correction, which is a change (replacement or a change in content such as an attribute), object addition, or object deletion. In the example of the anomaly detection, a broken hand is deleted from the facility configuration, and an operable hand is added. The hand may be changed. In the present loop, the correction of the required object is completed.

In the corrected manufacturing line configuration, production is planned. This planning clarifies a difference from existing plans. First, an order or demand is set (Step 1811).

An individual production object is set (Step 1812).

Production is planned (Step 1813), and the improvement is compared to line configurations and plans in the related art, that is, past records (1814). After the improvement, a situation where the production cannot be continued due to breakdown or the like may also occur. In this case, evaluation may be executed from the viewpoint of a reduction in loss caused by the production continuance.

A schedule is set (Step 1815), the production is executed (1816), and the improvement is completed (1817).

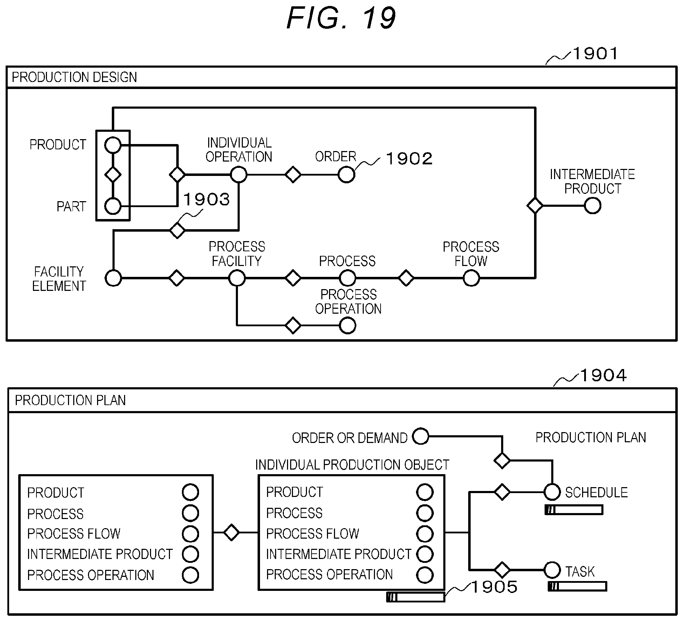

According to the method of configuring the line using the objects and the relations therebetween, means itself for checking the progress can be planned. In particular, when a person manages the means, means for displaying the progress on a terminal or screen of a computer is used. FIG. 19 illustrates an example of the screen. In the step of configuring the line, a production design screen 1901 is illustrated in FIG. 19. A circle 1902 represents a class. For example, when the circle is a black circle, the black circle represents that setting of objects of the corresponding class is completed. In addition, a rhomboid 1903 represents a relationship between objects of the class, and when the rhomboid is black, the black rhomboid represents that the setting is completed. The same applies to a production plan 1904. In order to represent the degree of completion of setting corresponding to the volume of the product, a bar (rod) display 1905 of the progress is used. A field for designating the product may be present.

Hereinabove, the embodiment regarding the information set configuring the manufacturing line and the configuration method thereof has been described.

The means for consolidating continuous units of operation into a process to determine the process facility configuration using a combination of a product or part, a unit of operation, and a facility element for the line configuration optimization has been already described.

Next, a configuration of triplet data including a product or part, a unit of operation, and a facility element will be described. The triplet data configuration is knowledge for line designing based on the line configuration, that is, one representation of ontology for engineering. The input of the line configuration optimization is arrays of products or parts and units of operation, the triplet for configuring the process facility is retrieved from the ontology DB, and the configuration is configured by the combination optimization.

Products or parts prepared as the configuration of the input are registered in a database that is a parts list. As the parts list BOM (Bill of Materials), a class of the production ontology PRDBillOFMaterials can be represented.

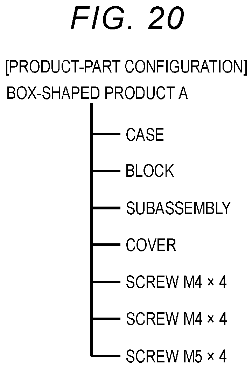

In addition, when an example of a product is illustrated in the drawing, a tree structure illustrated in FIG. 20 can be obtained. Names of the products or names of the parts can be classified and used for organizing similar operations or the like, and thus are standardized as a database.

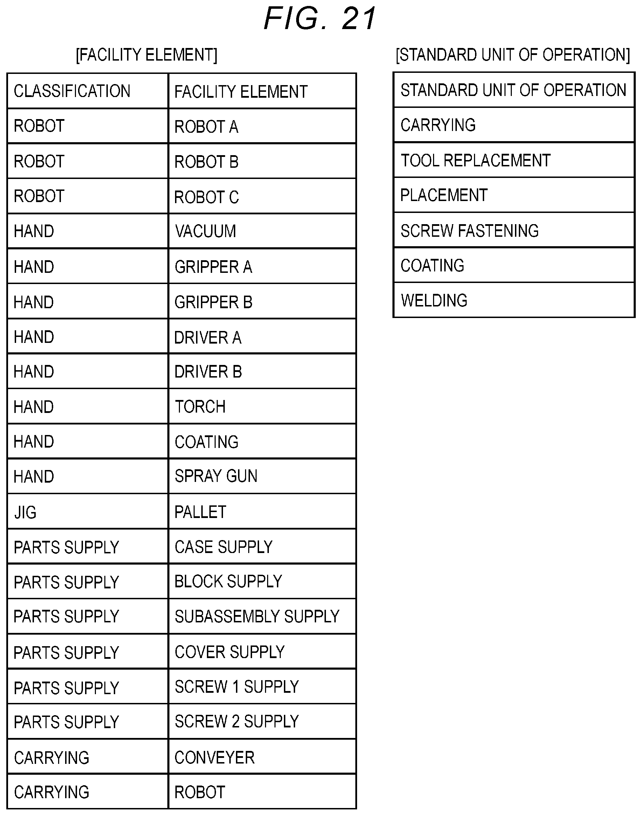

It is also operationally effective to catalog or standardize facility elements and units of operation to organize or selectively treat the facility elements and the units of operation. For example, tables illustrated in FIG. 21 can be obtained. The left table shows the facility elements, and the right table shows the units of operation called the standards. Regarding the facility elements, the field of classification is given. Regarding the units of operation, the sorting classification can also be given.

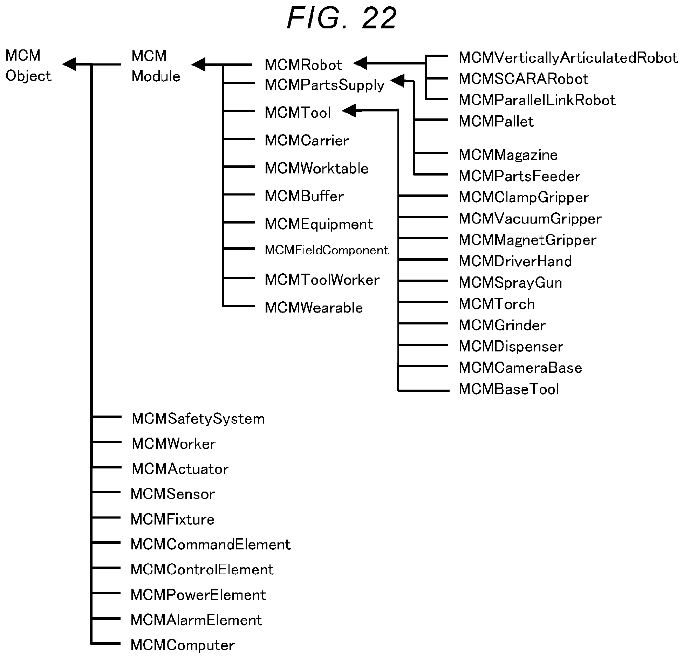

As an example of detailed classification, the facility elements can be classified as illustrated in FIG. 22. Class names MCMObject, MCMModule, and the like are included in the configuration of the production ontology illustrated in FIG. 16. In addition, the classification is made based on structural characteristics of the facility elements. For example, robots are classified into a vertically articulated robot, a SCARA robot, and a parallel link robot.

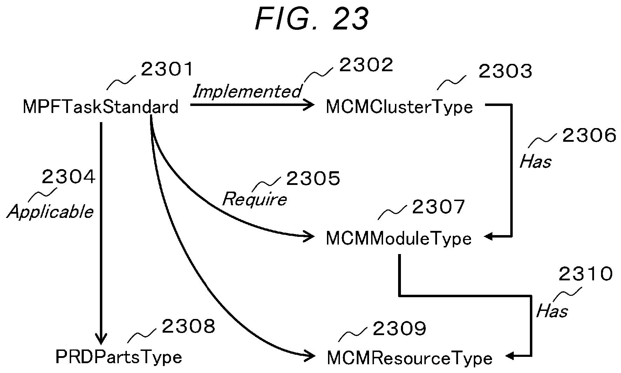

FIG. 23 illustrates representations of a class diagram of the triplet.

The class of the unit of operation is represented by MPFTaskStandard 2301, and only a relation with a part PRDPartsType 2308 is shown regarding the product or part. The part is associated with a product. The relation is an applicable 2304 representing that the unit of operation is applicable to the part. A facility element MCMModuleType 2307 associated with the unit of operation is a standard facility configuration element, which is a robot or a parts supply equipment. An auxiliary or secondary structure such as a sensor or an actuator is an MCMResourceType 2309. MCMResourceType 2309 is a facility element required for the operation, and the relation is Require 2305 representing requiring. In order to consolidate a combination of facility elements, a cell is abstracted. This cluster is MCMClusterType 2303, and has a facility element (has 2306). The unit of operation is implemented using the cluster (implemented 2302).

Hereinabove, the triplet ontology has been described.

Hereinabove, the process planning device and the process planning method according to the present invention have been described.

[Second Embodiment]

The present embodiment relates to the technical idea described in the first embodiment and particularly relates to the high-order technical idea, which is an example using other representations.

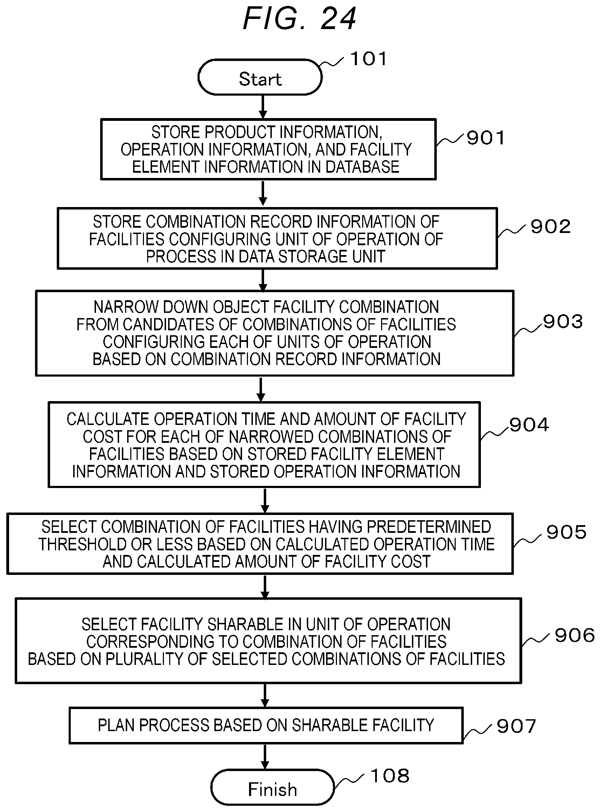

FIG. 24 illustrates a flowchart of the present embodiment.

In 101, the processing starts. In 901, a data storage unit stores product information, operation information, and facility element information. The data storage unit may function as a database. In 902, combination record information of facilities configuring units of operation of a process is stored in the database or the data storage unit. In 903, a desired combination of facilities is narrowed down based on the combination record information from candidates of combinations of facilities configuring each of the units of operation. In 904, an operation time and an amount of facility cost for each of the narrowed combinations of facilities are calculated based on the stored facility element information and the stored operation information. In 905, the combination of facilities having a predetermined threshold or less is selected based on the calculated operation time and the calculated amount of facility cost. In 906, a facility sharable in the unit of operation corresponding to the combination of facilities are selected based on a plurality of the selected combinations of facilities. In 907, a process is planned based on the sharable facility. In 108, the process planning is completed.

Hereinabove, the technical idea and the concept of the present invention have been described in detail. As long as the disclosed technical idea or concept is used, modification examples or similar examples are included in the scope of the present invention. In addition, a combination of the contents disclosed in the plurality of embodiments is included in the scope of the present invention.

Embodiments of the present invention are, for example, as follows.

First, through a sequence of operations for manufacturing a product, a set of facilities for implementing these operations can be acquired.

Regarding all of the operations, by consolidating partially continuous operations into one process, an array of processes for manufacturing a product, that is, a process flow is determined.

At this time, the configuration of facilities in each of the processes can be determined. At this time, the number of facilities can be set such that facility elements used in common in the operation of the process can be shared. In addition, the processing time is set for the configuration of the facility element for the operation, and the price is set for the facility element. In this case, the optimum line configuration can be determined by optimization from the viewpoint of minimizing either or both of the processing time and the cost.

For the unit of operation, a combination of parts and facility elements of a product is standardized as knowledge and stored in a database.

The line configuration is represented by a product, parts, a facility element, a unit of operation, a process, a process flow, an intermediate product, and relationships therebetween. By setting the relationships between the substances thereof, the line can be configured. Accordingly, the line can be configured by associating (allocating, selecting) a combination of a part, a facility element, and a unit of operation with a sequence of operations for manufacturing a product.

For the line configuration, information regarding an order or a schedule required for production planning can be generated. Therefore, the optimum manufacturing line for productivity can be designed by production planning and scheduling from the viewpoint of the operation or the production quantity.

Even when only a part of the examples is implemented, this part is included in the scope of the present invention as long as the technical idea disclosed in the present specification is used.

In addition, examples of the present invention can be represented as follows.

<First Example>

A process planning device including a data storage unit configured to store product information, operation information, and facility element information,

in which combination record information of facilities configuring units of operation of a process is stored in the data storage unit,

a desired combination of facilities is narrowed down based on the combination record information from candidates of combinations of facilities configuring each of the units of operation,

an operation time and an amount of facility cost for each of the narrowed combinations of facilities are calculated based on the stored facility element information and the stored operation information,

the combination of facilities having a predetermined threshold or less is selected based on the calculated operation time and the calculated amount of facility cost, and

a facility sharable in the unit of operation corresponding to the combination of facilities is selected based on a plurality of the selected combinations of facilities, and

a process is planned based on the sharable facility.

<Second Example>

The process planning device according to <First Example>,

in which the product information is information regarding a product and parts,

the operation information is information regarding a sequence of units of operation for manufacturing a product, and

the information regarding the units of operation are consolidated to configure a process and a sequence of processes is set as a process flow to configure a manufacturing line configuration.

<Third Example>

The process planning device according to <First Example>,

in which a process facility configuration for manufacturing a product is configured,

a record of a processing time in a process of the product is acquired,

an actual transaction amount of a facility element of a process facility and an amount of cost for operation are acquired, and

the record, the actual transaction amount, and the amount of cost are registered and updated as data regarding a combination of the product information, the operation information, and the facility element information.

<Fourth Example>

The process planning device according to <First Example>,

in which when a planned process facility configuration and a planned process are applied to actual production and implemented and are improved and modified, a combination of the product information, the operation information, and the facility element information is registered based on an actual operation content and an actual process facility configuration.

<Fifth Example>

The process planning device according to <First Example>,

in which configuration information of a manufacturing line is configured with information regarding a product and parts, information regarding a facility element, information regarding a unit of operation, information regarding a process facility configuration, information regarding a process, information regarding a process flow, information regarding an intermediate product between processes, and information regarding a process operation.

<Sixth Example>

The process planning device according to <Fifth Example>,

in which information for production planning is configured with
information regarding an order or demand,
information regarding individual production object substances corresponding to substances of a product or part, a process, a process flow, a process operation, and an intermediate product, and
information regarding a schedule and a task belonging to the schedule.

<Seventh Example>

The process planning device according to <First Example>,
wherein processing is executed in the following order including:

(1) generating an object of a product or part;
(2) generating an object of a facility element and generating a relationship with another object;
(3) generating an object of a unit of operation and generating a relationship with another object;
(4) generating an object of a process facility configuration and generating a relationship with another object;
(5) generating an object of a process and generating a relationship with another object;
(6) generating an object of a process flow and generating a relationship with another object;
(7) generating an object of a process operation and generating a relationship with another object;
(8) generating an object of an intermediate product and generating a relationship with another object;
(9) generating an object of an order or demand and generating a relationship with another object;
(10) generating individual production objects and generating a relationship between the various individual production objects and a relationship with another object;
(11) generating an object of a schedule and a task and generating a relationship with another object;
(12) generating an object of production record data and generating a relationship with another object; and
(13) configuring information with which production is actually executable.

<Eighth Example>

The process planning device according to <First Example>,
in which using information regarding a manufacturing line including configured processes, processing of a facility simulation is executed, and processing of production planning is executed to evaluate productivity.

<Ninth Example>

The process planning device according to <First Example>,

in which information regarding a manufacturing line including configured processes is managed as a knowledge for line designing that is production ontology represented by a relationship between classes each of which indicates a sort of data of each of objects, and
a manufacturing line is configured by generating an object of a class, and generating a relationship between objects or generating a relationship between objects as an attribute.

<Tenth Example>

The process planning device according to <First Example>,
wherein the product information, the operation information, and the facility element information are represented as triplet ontology by a class of a product or part, a class of a unit of operation, a class of a facility element, and a relationship between the classes to manage a knowledge for line configuration optimization.

## Claims

1. A process planning device comprising a data storage unit configured to store product information, operation information, and facility element information,

**EP 4 657 192 A1**

wherein combination record information of facilities configuring units of operation of a process is stored in the data storage unit,

a desired combination of facilities is narrowed down based on the combination record information from candidates of combinations of facilities configuring each of the units of operation,

an operation time and an amount of facility cost for each of the narrowed combinations of facilities are calculated based on the stored facility element information and the stored operation information,

the combination of facilities having a predetermined threshold or less is selected based on the calculated operation time and the calculated amount of facility cost, and

a facility sharable in the unit of operation corresponding to the combination of facilities is selected based on a plurality of the selected combinations of facilities, and

a process is planned based on the sharable facility.

2. The process planning device according to claim **1,**

wherein the product information is information regarding a product and parts,

the operation information is information regarding a sequence of units of operation for manufacturing a product, and

the information regarding the units of operation are consolidated to configure a process and a sequence of processes is set as a process flow to configure a manufacturing line configuration.

3. The process planning device according to claim 1,

wherein a process facility configuration for manufacturing a product is configured,

a record of a processing time in a process of the product is acquired,

an actual transaction amount of a facility element of a process facility and an amount of cost for operation are acquired, and

the record, the actual transaction amount, and the amount of cost are registered and updated as data regarding a combination of the product information, the operation information, and the facility element information.

4. The process planning device according to claim 1,

wherein when a planned process facility configuration and a planned process are applied to actual production and implemented and are improved and modified, a combination of the product information, the operation information, and the facility element information is registered based on an actual operation content and an actual process facility configuration.

5. The process planning device according to claim 1,

wherein configuration information of a manufacturing line is configured with information regarding a product and parts, information regarding a facility element, information regarding a unit of operation, information regarding a process facility configuration, information regarding a process, information regarding a process flow, information regarding an intermediate product between processes, and information regarding a process operation.

6. The process planning device according to claim 5,

wherein information for production planning is configured with

information regarding an order or demand,

information regarding individual production object substances corresponding to substances of a product or part, a process, a process flow, a process operation, and an intermediate product, and

information regarding a schedule and a task belonging to the schedule.

7. The process planning device according to claim 1,

wherein processing is executed in the following order including:

(1) generating an object of a product or part;

(2) generating an object of a facility element and generating a relationship with another object;

(3) generating an object of a unit of operation and generating a relationship with another object;

(4) generating an object of a process facility configuration and generating a relationship with another object;

(5) generating an object of a process and generating a relationship with another object;

(6) generating an object of a process flow and generating a relationship with another object;

(7) generating an object of a process operation and generating a relationship with another object;

(8) generating an object of an intermediate product and generating a relationship with another object;

(9) generating an object of an order or demand and generating a relationship with another object;

(10) generating individual production objects and generating a relationship between the various individual production objects and a relationship with another object;

(11) generating an object of a schedule and a task and generating a relationship with another object;

(12) generating an object of production record data and generating a relationship with another object; and

(13) configuring information with which production is actually executable.

8. The process planning device according to claim 1,
wherein using information regarding a manufacturing line including configured processes, processing of a facility simulation is executed, and processing of production planning is executed to evaluate productivity.

9. The process planning device according to claim 1,

wherein information regarding a manufacturing line including configured processes is managed as a knowledge for line designing that is production ontology represented by a relationship between classes each of which indicates a sort of data of each of objects, and
a manufacturing line is configured by generating an object of a class, and generating a relationship between objects or generating a relationship between objects as an attribute.

10. The process planning device according to claim 1,
wherein the product information, the operation information, and the facility element information are represented as triplet ontology by a class of a product or part, a class of a unit of operation, a class of a facility element, and a relationship between the classes to manage a knowledge for line configuration optimization.

## FIG. 1

```
            ( Start )           ～ 1 0 1
                 │
                 ▼
   ┌─────────────────────────────┐
   │  ACQUIRE (INPUT) SEQUENCE    │
   │    OF UNITS OF OPERATION     │   ～ 1 0 2
   │       REQUIRED FOR           │
   │    MANUFACTURING PRODUCT     │
   └─────────────────────────────┘
                 │
                 ▼
   ┌─────────────────────────────┐
   │  ACQUIRE PRODUCT INFORMATION,│
   │  PROCESS INFORMATION,        │   ～ 1 0 3
   │  UNIT-OF-OPERATION           │
   │  INFORMATION, AND            │
   │  COMBINATION INFORMATION     │
   │  THEREOF                     │
   └─────────────────────────────┘
                 │
                 ▼
   ┌─────────────────────────────┐
   │  RETRIEVE FACILITY           │
   │  CONFIGURATION INFORMATION   │   ～ 1 0 4
   │  FOR UNIT OF OPERATION       │
   └─────────────────────────────┘
                 │
                 ▼
   ┌─────────────────────────────┐
   │  ACQUIRE OPERATION TIME AND  │
   │  AMOUNT OF FACILITY COST     │   ～ 1 0 5
   │  FOR EACH UNIT OF OPERATION  │
   └─────────────────────────────┘
                 │
                 ▼
   ┌─────────────────────────────┐
   │  SELECT (PRIORITIZE) PROCESS │
   │  APPLICATION OBJECT OF UNIT  │   ～ 1 0 6
   │  OF OPERATION                │
   └─────────────────────────────┘
                 │
                 ▼
   ┌─────────────────────────────┐
   │  CONSOLIDATE CONTINUOUS      │
   │  UNITS OF OPERATION TO SHARE │
   │  FACILITY, AND GENERATE      │   ～ 1 0 7
   │  SEQUENCE OF PROCESSES FOR   │
   │  MANUFACTURING PRODUCT       │
   └─────────────────────────────┘
                 │
                 ▼
           ( Finish )           ～ 1 0 8
```

# FIG. 2

**PROCESS PLANNING SYSTEM (LINE DESIGNING FUNCTION)** ~ 221

| 201 | 202 | 203 |
|---|---|---|
| PRODUCT MANAGEMENT | OPTIMIZATION-SIMULATION MANAGEMENT | LINE DESIGN PROGRESS MANAGEMENT |

| 204 | 205 | 206 |
|---|---|---|
| OBJECT MANAGEMENT | OBJECT ASSOCIATION | LINE CONFIGURATION OPTIMIZATION |

| 207 | 208 | 209 | 210 |
|---|---|---|---|
| OBJECT COMBINATION MANAGEMENT | CATALOG-CASE MANAGEMENT (VALUATION OF EVALUATION PREFERENTIAL ATTRIBUTE) | INFERENCE FUNCTION | CASE EXTRACTION |

| 211 | 212 | 213 | 214 | 215 |
|---|---|---|---|---|
| SIMULATOR | SCHEDULER | DATA REGISTRATION | DATA ACQUISITION | UI |

222 COMPUTER

223

- TERMINAL (UI) ~ 224
- MES/SCADA ~ 225
- CAD/PLM ~ 226
- DATA STORAGE UNIT ~ 227
- FACILITY TERMINAL ~ 228
- CONTROL EQUIPMENT (PLC, CONTROLLER) ~ 229

## FIG. 3

ONTOLOGY DB (SET CATALOG OR STANDARD) ~ 3 0 1

NEW LINE DESIGNING
(SET PRODUCT OR PART AND ORDER OF
UNITS OF OPERATION) ~ 3 0 2

SELECT LINE CONFIGURATION ELEMENT ~ 3 0 3

SATISFACTION OF LINE CONFIGURATION
OPTIMIZATION OBJECT DATA SUFFICIENCY ~ 3 0 4

COMBINATION OPTIMIZATION PROCESSING ~ 3 0 5

SET PRODUCTION CONDITION (PRODUCTION OBJECT) ~ 3 0 6

PLAN SCHEDULE ~ 3 0 7

EXECUTE PRODUCTION ~ 3 0 8

STORE LINE DESIGNING RESULT
AND STORE PRODUCTION RECORD ~ 3 0 9

LEARN COMBINATION OF PART ×
OPERATION × FACILITY ELEMENT ~ 3 1 0

# FIG. 4

| No | PRODUCT OR PART | UNIT OF OPERATION | PROCESSING TIME (SEC) | FACILITY ELEMENT | AMOUNT OF MONEY (YEN) |
|---|---|---|---|---|---|
| 1 | PART | INPUT | 30 | TABLE | 300K |
| | | | | PARTS SUPPLY | 500K |
| 2 | PART | CARRYING | 10 | CONVEYER A | 10K |
| 3 | PART | CARRYING | 5 | CONVEYER B | 20K |
| 4 | PART | CARRYING | 10 | ROBOT A | 1M |
| | | | | CLAMP A | 300K |
| 5 | PART | CARRYING | 3 | ROBOT B | 3M |
| | | | | VACUUM A | 1M |
| 6 | NONE | TOOL REPLACEMENT | 20 | ROBOT A | 1M |
| | | | | CLAMP A | 300K |
| | | | | DRIVER A | 500K |
| 7 | PART | PLACEMENT | 8 | ROBOT A | 1M |
| | | | | CLAMP A | 300K |
| 8 | PART | PLACEMENT | 2 | DEDICATED FACILITY | 500K |
| 9 | PART 1, PART 2 | INSERTION | 10 | ROBOT A | 1M |
| | | | | CLAMP A | 300K |
| | | | | PART 2 SUPPLY | 100K |
| 10 | PART 1, PART 2 | INSERTION | 3 | ROBOT B | 3M |
| | | | | GRIPPER B | 300K |
| | | | | PART 2 SUPPLY | 100K |
| 11 | PART 1, PART 2, SCREW | SCREW FASTENING | 20 | ROBOT A | 1M |
| | | | | DRIVER A | 400K |
| | | | | SCREW SUPPLY | 200K |
| 12 | PART | OUTPUT | 5 | BUFFER | 50K |

FIG. 5

# FIG. 6

| PART | UNIT OF OPERATION | FACILITY | PROCESS | PROCESS FACILITY | SUPPLEMENT |
|---|---|---|---|---|---|
| CASE | INPUT | CASE SUPPLY | LOADING PROCESS | CASE SUPPLY, CONVEYER | |
| CASE | CARRYING | CONVEYER | | | |
| CASE, BLOCK | INSERTION | ROBOT A, CLAMP A, BLOCK SUPPLY, WORKTABLE | FIRST PROCESS | ROBOT A, CLAMP A, BLOCK SUPPLY, DRIVER M4, SCREW M4 SUPPLY, SUBASSEMBLY SUPPLY, WORKTABLE | GRIPPER A → DRIVER M4 → GRIPPER A → HAND REPLACEMENT OF DRIVER M4 REQUIRED, CARRYING TO NEXT STEP REQUIRED |
| CASE, BLOCK, SCREW M4 × 4 | SCREW FASTENING | ROBOT A, DRIVER M4, SCREW M4 SUPPLY, WORKTABLE | | | |
| CASE, SUBASSEMBLY | INSERTION | ROBOT A, CLAMP A, SUBASSEMBLY SUPPLY, WORKTABLE | | | |
| CASE, SUBASSEMBLY, SCREW M4 × 4 | SCREW FASTENING | ROBOT A, DRIVER M4, SCREW M4 SUPPLY, WORKTABLE | | | |
| CASE, COVER | PLACEMENT | ROBOT A, VACUUM A, COVER SUPPLY, WORKTABLE | COVER PROCESS | ROBOT A, VACUUM A, COVER SUPPLY, DRIVER M5, SCREW M5 SUPPLY, WORKTABLE | VACUUM HAND A → HAND REPLACEMENT OF DRIVER M5 REQUIRED |
| CASE, COVER, SCREW M5 × 4 | SCREW FASTENING | ROBOT A, DRIVER M5, SCREW M5 SUPPLY, WORKTABLE | | | |
| CASE | CARRYING | CONVEYER | UNLOADING PROCESS | CONVEYER, BUFFER | |
| CASE | OUTPUT | BUFFER | | | |

## FIG. 7

[CASE CARRYING (LOADING)]
702

[BLOCK INSERTION]
CLAMP A 704
703 707

[SCREW FASTENING OF BLOCK]
DRIVER M4 708

[CASE INPUT]

CASE SUPPLY

701

CONVEYER

ROBOT A

705

WORKTABLE

BLOCK SUPPLY 706

ROBOT A

709

WORKTABLE

SCREW M4 SUPPLY 710

[SUBASSEMBLY INSERTION]
CLAMP A 712
715
711

[SCREW FASTENING OF SUBASSEMBLY]
DRIVER M4 716

ROBOT A

713

WORKTABLE

SUBASSEMBLY SUPPLY 714

ROBOT A

717

WORKTABLE

SCREW M4 SUPPLY 718

[COVER PLACEMENT]
VACUUM A
720
719

[SCREW FASTENING OF COVER]
DRIVER M5 724

ROBOT A

721

WORKTABLE

COVER SUPPLY 722

ROBOT A 725
723

WORKTABLE

SCREW M5 SUPPLY 726

[CASE CARRYING (UNLOADING)]
727

CONVEYER

[CASE OUTPUT]
728

BUFFER

# FIG. 8

801 LOADING STEP

811

802 FIRST PROCESS

823 825

826

812 SECOND PROCESS

803

833

813

804 UNLOADING STEP

CLAMP 1
DRIVER M4

ROBOT 1

VACUUM 1
DRIVER M5

831

ROBOT 2

834

837

824

821 CARRYING 1

WORKTABLE 1

CARRYING 2

832

WORKTABLE 2

CARRYING 3

CASE SUPPLY

BLOCK SUPPLY

SCREW M4 SUPPLY

COVER SUPPLY

SCREW M5 SUPPLY

BUFFER

822

SUBASSEMBLY SUPPLY

827

835

836

838

828

829

830

## FIG. 9A

EXAMPLE WHERE ARRAY OF UNITS OF OPERATION OR UNIT OF OPERATION ITSELF IS PROCESS

| PROCESS | TIME | OPERATION NAME | FACILITY ELEMENT (SAME COLUMN IS SAME MODEL) | | | | | | | | | |
|---|---|---|---|---|---|---|---|---|---|---|---|---|
| 1 | 5 | ⓐ | 1 | | 3 | | | | | | | |
| 2 | 10 | ⓑ | 1 | 2 | 3 | | | | | | | |
| 3 | 7 | ⓒ | 1 | | 3 | 4 | | | | | | |
| 4 | 15 | ⓓ | | | | | 5 | 6 | | | | |
| 5 | 20 | ⓔ | | | | | 5 | | 7 | | | |
| 6 | 3 | ⓕ | 1 | | 3 | 4 | | | | | | |
| 7 | 9 | ⓖ | | | | | | | | 8 | 9 | |
| 8 | 10 | ⓗ | | | | | | | | 8 | 9 | 10 |

## FIG. 9B

ALL OPERATIONS ARE IN ONE PROCESS

| PROCESS | TIME | OPERATION NAME | FACILITY ELEMENT (SAME COLUMN IS SAME MODEL) |
|---|---|---|---|
| 1 | 79 (5+10+7+15+20+3+9+10) | ⓐⓑⓒⓓ ⓔⓕⓖⓗ | 1 2 3 4 5 6 7 8 9 10 |

## FIG. 9C

EXAMPLE INCLUDING FOUR PROCESSES

| PROCESS | TIME | OPERATION NAME | FACILITY ELEMENT (SAME COLUMN IS SAME MODEL) | | | | | | | | | |
|---|---|---|---|---|---|---|---|---|---|---|---|---|
| 1 | 15 (5+10) | ⓐⓑ | 1 | 2 | 3 | | | | | | | |
| 2 | 22 (7+15) | ⓒⓓ | 1 | | 3 | 4 | 5 | 6 | | | | |
| 3 | 20 (20) | ⓔ | | | | | 5 | | 7 | | | |
| 4 | 22 (3+9+10) | ⓕⓖⓗ | 1 | | 3 | 4 | | | | 8 | 9 | 10 |

## FIG. 10A

COMBINATION OF STANDARD FACILITY ELEMENTS

PICKING ⟶ INSERTION ⟶ TOOL REPLACEMENT

⟶ PICKING ⟶ SCREW FASTENING ⟶ TOOL REPLACEMENT

⟶ PICKING ⟶ INSERTION ⟶ TOOL REPLACEMENT

⟶ PICKING ⟶ SCREW FASTENING ⟶ CARRYING

CLAMP 1
DRIVER M4
ROBOT 1
WORKTABLE 1
CARRYING 2
BLOCK SUPPLY
SCREW 1 SUPPLY
SUBASSEMBLY SUPPLY

## FIG. 10B

TIME REDUCTION OF TWO-ROBOT FORMATION

PICKING ⟶ INSERTION ⟶ PICKING ⟶ INSERTION ⟶ CARRYING

PICKING ⟶ SCREW FASTENING ⟶ PICKING ⟶ SCREW FASTENING

CLAMP 1   DRIVER M4
ROBOT 1   ROBOT 2
WORKTABLE 1   CARRYING 2
BLOCK SUPPLY   SCREW 1 SUPPLY
SUBASSEMBLY SUPPLY

## FIG. 10C

TIME REDUCTION OF FOUR-ROBOT FORMATION

PICKING ⟶ INSERTION ⟶ SCREW FASTENING ⟶ CARRYING
PICKING

PICKING ⟶ INSERTION ⟶ SCREW FASTENING
PICKING

CLAMP 1   DRIVER M4_1
ROBOT 1   ROBOT 2
BLOCK SUPPLY   SCREW 1 SUPPLY
WORKTABLE 1   CARRYING 2
SUBASSEMBLY SUPPLY   SCREW 1 SUPPLY
ROBOT 3   ROBOT 4
CLAMP 2   DRIVER M4_2

# FIG. 11

PROCESS PLAN ①

CAD (PRODUCT) → GENERATE OPERATION ORDER → OPERATION CONTENT

LINE CONFIGURATION (FOR PRODUCTION)

PRODUCTIVITY EVALUATION ← LINE Sim

PRODUCTION PLAN (SCHEDULER)

⑥

SELECT CELL

LINE CONFIGURATION OPTIMIZATION

LAYOUT DESIGN ④

LAYOUT DESIGN

LINE CONFIGURATION (FOR PROCESS)

CELL ABSTRACT (FUNCTION ABSTRACT) ②

MES

CONTROL DESIGN ⑤

LINE CONFIGURATION (PLACEMENT) ③

ELEMENT DESIGN

CAD (FACILITY DESIGN)

OPERATION PLAN

GEOMETRY RELATED

SEQUENCE CONTROL ROBOT PATH PLANNING

MONITORING / CONTROL

# FIG. 12

# FIG. 13

[AT TIME OF NEW INSTALLATION]

[AT TIME OF IMPROVEMENT]

PRODUCTION PLANNING

PRODUCT OR PART

FACILITY ELEMENT

UNIT OF OPERATION

ORDER OF UNITS OF OPERATION

PROCESS FACILITY CONFIGURATION

PROCESS

PROCESS FLOW

INTERMEDIATE PRODUCT

PROCESS OPERATION

ORDER OR DEMAND

PRODUCTION PLANNING

INDIVIDUAL PRODUCTION OBJECT

SCHEDULE

PRODUCTION RECORD DATA

PRODUCTION PLANNING ANOMALY DETECTION

APPLICATION

APPLICATION

AUTOMATIC CORRECTION

CONSTRAINT PROPAGATION

PRODUCT OR PART

FACILITY ELEMENT

UNIT OF OPERATION

ORDER OF UNITS OF OPERATION

PROCESS FACILITY CONFIGURATION

PROCESS

PROCESS FLOW

INTERMEDIATE PRODUCT

PROCESS OPERATION

ORDER OR DEMAND

INDIVIDUAL PRODUCTION OBJECT

SCHEDULE

PRODUCTION RECORD DATA

# FIG. 14

[PRODUCT OR PART]

PRODUCT OBJECT
PART OBJECT

PARENT-CHILD
RELATIONSHIP
CONNECTION
RELATIONSHIP

[UNIT OF OPERATION]

OPERATION NAME OBJECT
OPERATION SORT OBJECT

RELATIONSHIP WITH OBJECT
OF PRODUCT OR PART
RELATIONSHIP WITH OBJECT
OF FACILITY ELEMENT

[ORDER OF UNITS OF OPERATION]

NONE

RELATIONSHIP WITH
OBJECT OF INDIVIDUAL OPERATION
PARTIAL ORDER RELATION

[FACILITY ELEMENT]

FACILITY NAME OBJECT
FACILITY SORT OBJECT

NONE

[PROCESS FACILITY
CONFIGURATION]

PROCESS FACILITY OBJECT

RELATIONSHIP WITH
INDIVIDUAL OPERATION ORDER
CLUSTER RELATIONSHIP

[PROCESS]

PROCESS NAME OBJECT

RELATIONSHIP WITH
INDIVIDUAL OPERATION ORDER
RELATIONSHIP WITH
PROCESS FACILITY

[PROCESS FLOW]

PROCESS FLOW
NAME OBJECT

RELATIONSHIP WITH
OBJECT OF PROCESS
PARTIAL ORDER RELATION

[PROCESS OPERATION]

OPERATION OBJECT
EVENT OBJECT

RELATIONSHIP WITH
PROCESS FACILITY
DIRECTED GRAPH
RELATIONSHIP

[INTERMEDIATE PRODUCT]

INTERMEDIATE
PRODUCT OBJECT

RELATIONSHIP WITH
PRODUCT OR PART
RELATIONSHIP WITH
PROCESS FLOW

[ORDER OR DEMAND]

ORDER OR DEMAND
OBJECT

RELATIONSHIP WITH
PRODUCT OR PART

[INDIVIDUAL PRODUCTION OBJECT]

PRODUCT OR PART OBJECT,
INTERMEDIATE PRODUCT OBJECT,
PROCESS OBJECT, PROCESS
OPERATION OBJECT, PROCESS
FLOW OBJECT

RELATIONSHIP WITH
EACH OF OBJECTS ABOVE
RELATIONSHIP WITH
ORDER OR DEMAND

[SCHEDULE]

SCHEDULE OBJECT
TASK OBJECT

SCHEDULE-TASK RELATIONSHIP
TIME-ORDER RELATIONSHIP
RELATIONSHIP WITH INDIVIDUAL
PRODUCTION OBJECT

[PRODUCTION RECORD DATA]

NONE (SCHEDULE OBJECT)

RELATIONSHIP WITH SCHEDULE
(EXECUTION HISTORY
DATA ATTRIBUTE)
RELATIONSHIP WITH MES SETTING

# FIG. 15

# FIG. 16

## FIG. 17

Start — 1701

REGISTER NEW PRODUCT — 1702

SET PRODUCT OR PART — 1703

SET FACILITY ELEMENT — 1704

SET UNIT OF OPERATION — 1705

SET PROCESS FACILITY — 1706

SET PROCESS — 1707

SET PROCESS FLOW — 1708

SET PROCESS OPERATION — 1709

SET INTERMEDIATE PRODUCT — 1710

REGISTER FACILITY SIMULATION — 1711

EXECUTE FACILITY SIMULATION — 1712

REGISTER PLAN — 1713

SET ORDER OR DEMAND — 1714

SET INDIVIDUAL PRODUCTION OBJECT — 1715

PLAN PRODUCTION — 1716

SET SCHEDULE — 1717

EXECUTE PRODUCTION — 1718

Finish — 1719

## FIG. 18

```
        Start                    1801

    COLLATE SCHEDULE             1802

    ACQUIRE RECORD               1803

   COMPARE PLAN AND RECORD       1804

    DUPLICATE SCHEDULE           1805

  SELECT CORRECTION OBJECT       1806

  ACQUIRE RELATED OBJECTS        1807

   REGARDING EACH CLASS          1808

       CORRECTION                1809
 (CHANGE, ADDITION, DELETION)

 FROM UPSTREAM SIDE FOR EACH CATEGORY   1810

   SET ORDER OR DEMAND           1811

     SET INDIVIDUAL              1812
   PRODUCTION OBJECT


    PLAN PRODUCTION              1813

  COMPARE IMPROVEMENT            1814
      TO RECORD

     SET SCHEDULE                1815

  PREPARE PRODUCTION             1816

       Finish                    1817
```

# FIG. 19

# FIG. 20

[PRODUCT-PART CONFIGURATION]

BOX-SHAPED PRODUCT A

- CASE
- BLOCK
- SUBASSEMBLY
- COVER
- SCREW M4 × 4
- SCREW M4 × 4
- SCREW M5 × 4

# FIG. 21

[FACILITY ELEMENT]

| CLASSIFICATION | FACILITY ELEMENT |
|---|---|
| ROBOT | ROBOT A |
| ROBOT | ROBOT B |
| ROBOT | ROBOT C |
| HAND | VACUUM |
| HAND | GRIPPER A |
| HAND | GRIPPER B |
| HAND | DRIVER A |
| HAND | DRIVER B |
| HAND | TORCH |
| HAND | COATING |
| HAND | SPRAY GUN |
| JIG | PALLET |
| PARTS SUPPLY | CASE SUPPLY |
| PARTS SUPPLY | BLOCK SUPPLY |
| PARTS SUPPLY | SUBASSEMBLY SUPPLY |
| PARTS SUPPLY | COVER SUPPLY |
| PARTS SUPPLY | SCREW 1 SUPPLY |
| PARTS SUPPLY | SCREW 2 SUPPLY |
| CARRYING | CONVEYER |
| CARRYING | ROBOT |

[STANDARD UNIT OF OPERATION]

| STANDARD UNIT OF OPERATION |
|---|
| CARRYING |
| TOOL REPLACEMENT |
| PLACEMENT |
| SCREW FASTENING |
| COATING |
| WELDING |

## FIG. 22

## FIG. 23

MPFTaskStandard 2301 — *Implemented* → MCMClusterType 2302

2303

2304 *Applicable*

2305 *Require*

2306 *Has*

2307 MCMModuleType

2308 PRDPartsType

2309 MCMResourceType

2310 *Has*

# FIG. 24

Start ~101

STORE PRODUCT INFORMATION, OPERATION INFORMATION, AND FACILITY ELEMENT INFORMATION IN DATABASE ~901

STORE COMBINATION RECORD INFORMATION OF FACILITIES CONFIGURING UNIT OF OPERATION OF PROCESS IN DATA STORAGE UNIT ~902

NARROW DOWN OBJECT FACILITY COMBINATION FROM CANDIDATES OF COMBINATIONS OF FACILITIES CONFIGURING EACH OF UNITS OF OPERATION BASED ON COMBINATION RECORD INFORMATION ~903

CALCULATE OPERATION TIME AND AMOUNT OF FACILITY COST FOR EACH OF NARROWED COMBINATIONS OF FACILITIES BASED ON STORED FACILITY ELEMENT INFORMATION AND STORED OPERATION INFORMATION ~904

SELECT COMBINATION OF FACILITIES HAVING PREDETERMINED THRESHOLD OR LESS BASED ON CALCULATED OPERATION TIME AND CALCULATED AMOUNT OF FACILITY COST ~905

SELECT FACILITY SHARABLE IN UNIT OF OPERATION CORRESPONDING TO COMBINATION OF FACILITIES BASED ON PLURALITY OF SELECTED COMBINATIONS OF FACILITIES ~906

PLAN PROCESS BASED ON SHARABLE FACILITY ~907

Finish ~108

Europäisches
Patentamt

European
Patent Office

Office européen
des brevets

# EUROPEAN SEARCH REPORT

**Application Number**

EP 25 17 7504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/144863 A2 (SUNSTAR CO LTD [KR]; PARK IN CHUL [KR]) 26 October 2012 (2012-10-26) * paragraph [0016] - paragraph [0041] * ----- | 1-10 | INV. G05B19/418 G06Q50/04 |
| A | US 2019/042990 A1 (PAUL TOPON [JP] ET AL) 7 February 2019 (2019-02-07) * paragraph [0239] - paragraph [0251] * ----- | 1-10 | |
| A | US 2016/063411 A1 (RAVICHANDRAN VENKATESH COIMBATORE [US] ET AL) 3 March 2016 (2016-03-03) * paragraph [0080] - paragraph [0087] * ----- | 1-10 | |

**TECHNICAL FIELDS
SEARCHED          (IPC)**

G05B
G06Q

The present search report has been drawn up for all claims

| Place of search | Date of completion of the search | Examiner |
|---|---|---|
| Munich | 30 September 2025 | Tenbieg, Christoph |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

........................................................................................

& : member of the same patent family, corresponding
  document

EPO FORM 1503 03.82 (P04C01)

## EP 4 657 192 A1

## ANNEX TO THE EUROPEAN SEARCH REPORT
## ON EUROPEAN PATENT APPLICATION NO.

EP 25 17 7504

30-09-2025

| Patent document cited in search report | Publication date | Patent family member(s) | | Publication date |
|---|---|---|---|---|
| WO 2012144863 A2 | 26-10-2012 | CN | 103782312 A | 07-05-2014 |
| | | KR | 20120119543 A | 31-10-2012 |
| | | TW | 201243744 A | 01-11-2012 |
| | | WO | 2012144863 A2 | 26-10-2012 |
| US 2019042990 A1 | 07-02-2019 | CN | 109389273 A | 26-02-2019 |
| | | EP | 3441920 A1 | 13-02-2019 |
| | | JP | 6788555 B2 | 25-11-2020 |
| | | JP | 2019032659 A | 28-02-2019 |
| | | US | 2019042990 A1 | 07-02-2019 |
| US 2016063411 A1 | 03-03-2016 | NONE | | |

EPO FORM P0459

**REFERENCES CITED IN THE DESCRIPTION**

**Patent documents cited in the description**

- JP 2018128766 A
- JP 2003036296 A